(19) **Europäisches Patentamt European Patent Office Office européen des brevets**

(11) **EP 4 236 488 A1**

(12) **EUROPEAN PATENT APPLICATION**
published in accordance with Art. 153(4) EPC

(43) Date of publication:
**30.08.2023 Bulletin 2023/35**

(21) Application number: **21897192.7**

(22) Date of filing: **29.11.2021**

(51) International Patent Classification (IPC):
**H04W 52/14** (2009.01)

(52) Cooperative Patent Classification (CPC):
**H04L 5/00; H04W 52/14; H04W 52/34**

(86) International application number:
**PCT/CN2021/134042**

(87) International publication number:
**WO 2022/111692 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2020 CN 202011378888**

(71) Applicant: **Huawei Technologies Co., Ltd.**
**Shenzhen, Guangdong 518129 (CN)**

(72) Inventors:
• **CHEN, Zhijun**
 **Shenzhen, Guangdong 518129 (CN)**
• **PENG, Bingguang**
 **Shenzhen, Guangdong 518129 (CN)**
• **YANG, Fei**
 **Shenzhen, Guangdong 518129 (CN)**
• **LIU, Wei**
 **Shenzhen, Guangdong 518129 (CN)**
• **ZHAO, Zhilin**
 **Shenzhen, Guangdong 518129 (CN)**
• **JIANG, Cheng**
 **Shenzhen, Guangdong 518129 (CN)**

(74) Representative: **Gill Jennings & Every LLP**
**The Broadgate Tower**
**20 Primrose Street**
**London EC2A 2ES (GB)**

(54) **REFERENCE SIGNAL SENDING METHOD AND APPARATUS**

(57) This application provides a reference signal sending method and an apparatus, to resolve a problem that signal quality of a reference signal sent by a terminal device is poor due to a transmission limitation. In the method, a terminal device having a multi-transmit capability in a communication system may increase a transmit power for sending a reference signal, or send reference signals in a coherent form. According to the solution, coverage of the reference signal can be improved, and a probability that signal quality of the reference signal received by a network device is poor due to a transmission limitation can be reduced, that is, the signal quality of the reference signal received by the network device is improved. Finally, it is ensured that the communication system can obtain a maximum coherent gain in an uplink transmission direction, and coverage experience of a user is improved.

FIG. 2

EP 4 236 488 A1

**Description**

**CROSS-REFERENCE TO RELATED APPLICATIONS**

This application claims priority to Chinese Patent Application No. 202011378888.4, filed with the China National Intellectual Property Administration on November 30, 2020 and entitled "REFERENCE SIGNAL SENDING METHOD AND APPARATUS", which is incorporated herein by reference in its entirety.

**TECHNICAL FIELD**

This application relates to the field of communication technologies, and in particular, to a reference signal sending method and an apparatus.

**BACKGROUND**

In various communication systems such as a mobile communication system and a wireless fidelity (wireless fidelity, Wi-Fi) system, a multi-transmit capability gradually becomes an important configuration of a radio frequency capability of a terminal device. The terminal device having the multi-transmit capability has a plurality of transmit channels, and each transmit channel includes an antenna, so that the terminal device can transmit a plurality of signals through the plurality of transmit channels.

In addition, the terminal device may significantly increase uplink coverage by using a beamforming technology. The beamforming technology is actually coherently combining a plurality of signals to generate a directional beam, to obtain a significant signal gain in a specified direction, so as to achieve an effect of a coverage gain (also referred to as a coherent gain or a signal gain).

To obtain uplink beamforming that has a maximum signal gain in the specified direction (for example, a direction from the terminal device to a network device), the terminal device needs to determine a signal phase difference $\varphi$ between two adjacent uplink transmit channels, and send a service signal based on the signal phase difference $\varphi$.

Currently, the terminal device may obtain the signal phase difference by performing the following procedure.

The terminal device sends a same reference signal (with same amplitude and a same phase) through transmit channels. The network device may detect the amplitude and the phase of the reference signal, determine a target codebook based on the amplitude and the phase, and then send the target codebook to the terminal device. The terminal device may determine the signal phase difference $\varphi$ based on the received target codebook.

It can be learned from the foregoing descriptions that a prerequisite for obtaining the signal phase difference by the terminal device is that the network device can detect the amplitude and the phase of the reference signal. However, because a transmission environment is complex and changeable, the reference signal may undergo some transmission limitations (for example, the terminal device is in a weak-coverage scenario), and signal quality of the reference signal received by the network device is poor. In this case, the network device may not detect the correct amplitude and phase. Consequently, the network device cannot determine an optimal codebook, and finally the terminal device cannot obtain a maximum coherent gain.

**SUMMARY**

This application provides a reference signal sending method and an apparatus, to resolve a problem that signal quality of a reference signal sent by a terminal device is poor due to a transmission limitation.

According to a first aspect, an embodiment of this application provides a reference signal sending method. The method is applicable to a terminal device having a multi-transmit capability. The terminal device has a plurality of transmit channels, including a first transmit channel and a second transmit channel. The method includes the following steps.

The terminal device sends a first reference signal and a first service signal through the first transmit channel. The terminal device sends a second reference signal and a second service signal through the second transmit channel. A transmit power of the first reference signal is greater than a transmit power of the first service signal.

In the method, when sending a reference signal, the terminal device increases a transmit power for sending the reference signal, so that coverage of the reference signal can be improved, and a probability that signal quality of the reference signal received by a network device is poor due to a transmission limitation can be reduced. In addition, because the terminal device increases the transmit power of the reference signal, the signal quality of the reference signal received by the network device is high, so that a probability that the network device accurately detects amplitude and a phase of the reference signal can be increased, and a probability that the target codebook determined by the network device is an optimal codebook can be increased. In this way, when the network device configures the target codebook for the terminal device, the terminal device can transmit a service signal based on a target signal phase difference indicated by the target codebook, so that the service signal can obtain a maximum coherent gain in an uplink transmission direction, and coverage experience of a user can be improved.

In a possible design, a transmit power of the second reference signal is greater than a transmit power of the second service signal. Optionally, a transmit power of a reference signal sent through each transmit channel is greater than a transmit power of a service signal sent through the transmit channel, that is, the terminal device may increase the transmit power for sending the reference signal through each transmit channel, so that coverage of the reference signal can be significantly improved.

In a possible design, the terminal device sends the first reference signal through the first transmit channel at a first time domain position, and sends the second reference signal through the second transmit channel at a second time domain position. The first time domain position is different from the second time domain position. The transmit power of the first reference signal and the transmit power of the second reference signal each are less than or equal to a total transmit power of the terminal device.

According to the design, when the total transmit power of the terminal device is not increased, the terminal device can set different transmit channels to correspond to different time domain positions, to stagger time points at which the reference signals are sent through the transmit channels. In this way, compared with that in a conventional reference signal sending method, the terminal device can appropriately increase, within a range less than or equal to the total transmit power, the transmit power for sending the reference signal through each transmit channel.

In a possible design, when the terminal device staggers the time points at which the reference signals are sent through the transmit channels, the terminal device and the network device need to agree on a time domain position corresponding to each transmit channel, so that the network device can receive, at an accurate time domain position, a reference signal sent through a corresponding transmit channel. Optionally, the time domain position corresponding to each transmit channel may be specified in a protocol, or may be configured by the network device for the terminal device, or may be configured by the terminal device and notified to the network device. An agreement form and method are not limited in this application.

In a possible design, the terminal device does not send a signal through the second transmit channel at the first time domain position, and the terminal device does not send a signal through the first transmit channel at the second time domain position.

According to the design, when sending the reference signal through one transmit channel at one time domain position, the terminal device does not send a signal through another transmit channel. In this way, the terminal device can concentrate a transmit power on one transmit channel, so that a transmit power of each transmit channel can be maximized.

In a possible design, when the transmit power of the first service signal sent through the first transmit channel is the same as the transmit power of the second service signal sent through the second transmit channel, the transmit power of the first reference signal is less than or equal to n times the transmit power of the first service signal, and the transmit power of the second reference signal is less than or equal to n times the transmit power of the second service signal, where n is an integer greater than or equal to 2.

In a possible design, the terminal device sets a total transmit power of the terminal device to a first value. The first value is greater than a second value, and the first value is a total transmit power used when the terminal device sends the reference signal. The second value is a total transmit power used when the terminal device sends a service signal. The terminal device sends the first reference signal through the first transmit channel and sends the second reference signal through the second transmit channel based on the specified total transmit power of the terminal device.

According to the design, the terminal device can increase the total transmit power when the reference signal is sent. As a result, a transmit power for sending the reference signal through each transmit channel is also correspondingly increased.

In a possible design, the terminal device may send, based on the specified total transmit power of the terminal device, the first reference signal through the plurality of transmit channels in, but not limited to, the following two manners.

Manner 1: The terminal device sends the first reference signal through the first transmit channel and sends the second reference signal through the second transmit channel at a same time domain position based on the specified total transmit power of the terminal device. A sum of the transmit power of the first reference signal and a transmit power of the second reference signal is less than or equal to the specified total transmit power of the terminal device.

Manner 2: The terminal device sends the first reference signal through the first transmit channel at a first time domain position and sends the second reference signal through the second transmit channel at a second time domain position based on the specified total transmit power of the terminal device. The first time domain position is different from the second time domain position. The transmit power of the first reference signal and a transmit power of the second reference signal each are less than or equal to the specified total transmit power of the terminal device.

The solution provided in Manner 1 is more practical and requires fewer changes to software and hardware of the terminal device and the network device. The solution provided in Manner 2 can maximize a transmit power of each transmit channel.

In a possible design, the terminal device sends the first reference signal through the first transmit channel and sends the second reference signal through the second transmit channel when signal quality of a signal received by the terminal device from the network device deteriorates, or when signal quality of a signal received by the terminal device from the network device at a current moment is less than a specified threshold.

According to the design, the terminal device can adaptively increase the transmit power of the reference signal in a scenario in which a network environment is poor and the signal quality of the reference signal received by the network device is poor.

In a possible design, before the terminal device sends the first reference signal through the first transmit channel, and sends the second reference signal through the second transmit channel, the terminal device may further perform the following steps:

The terminal device sends a third reference signal through the first transmit channel, and sends a fourth reference signal through the second transmit channel. A transmit power of the third reference signal is equal to the transmit power of the first service signal, and a transmit power of the fourth reference signal is equal to the transmit power of the second service signal. The terminal device receives a negative acknowledgment response of the third reference signal and/or a negative acknowledgment response of the fourth reference signal from the network device, or the terminal device receives no acknowledgment response of the third reference signal and/or acknowledgment response of the fourth reference signal from the network device, or the terminal device receives no codebook configuration information from the network device.

Alternatively, the terminal device receives a first transmission indication sent by the network device. The first transmission indication indicates the terminal device to increase the transmit power of the reference signal.

According to the design, the terminal device can increase the transmit power of the reference signal when receiving no valid codebook configuration information or based on an indication of the network device.

In a possible design, after the terminal device sends the first reference signal through the first transmit channel, and sends the second reference signal through the second transmit channel, the method may further include the following steps.

The terminal device receives codebook configuration information from the network device. The codebook configuration information indicates the target codebook. The terminal device obtains the target codebook indicated by the codebook configuration information. The terminal device obtains the target signal phase difference based on the target codebook. The terminal device sends a third service signal through the first transmit channel and sends a fourth service signal through the second transmit channel based on the target signal phase difference. A phase difference between the third service signal and the fourth service signal is equal to the target signal phase difference.

According to the design, after receiving the codebook configuration information, the terminal device can perform phase modulation on a to-be-transmitted service signal, so that a phase difference between service signals of two adjacent transmit channels is the target signal phase difference. In this way, coherent combination can be performed on a plurality of service signals sent through the plurality of transmit channels, to form a directional beam. In addition, an EIRP of a coherent signal generated by performing coherent combination on the plurality of service signals is significantly greater than an EIRP of a signal transmitted through a single channel, and may also be greater than an EIRP of a coherent signal generated when a phase difference between the service signals is another value. Therefore, by performing this step, the service signal can obtain the maximum coherent gain in the uplink transmission direction, and coverage experience of the user can be improved.

In a possible design, a phase difference between the first reference signal and the second reference signal is 0. After the terminal device sends the first reference signal through the first transmit channel, and sends the second reference signal through the second transmit channel, the method further includes:

When the terminal device receives a negative acknowledgment response of the first reference signal and/or a negative acknowledgment response of the second reference signal from the network device, or receives no acknowledgment response of the first reference signal and/or acknowledgment response of the second reference signal, or receives no codebook configuration information from the network device, or receives a second transmission indication sent by the network device, the terminal device sends a fifth reference signal through the first transmit channel and sends a sixth reference signal through the second transmit channel based on each of a plurality of specified candidate signal phase differences. The second transmission indication indicates the terminal device to send the reference signals in a coherent form.

When the terminal device sends the fifth reference signal through the first transmit channel and sends the sixth reference signal through the second transmit channel based on a first candidate signal phase difference, a phase difference between the fifth reference signal and the sixth reference signal is equal to the first candidate signal phase difference. The first candidate signal phase difference is any one of the plurality of candidate signal phase differences.

According to the design, when the terminal device still fails, by increasing the transmit power of the reference signal, to obtain the valid codebook configuration information, the terminal device can further send the reference signals in the coherent form. Compared with an EIRP of a signal transmitted through a single channel, an EIRP of a coherent signal obtained after beam combination is significantly enhanced. Therefore, the terminal device may perform phase modulation on the reference signals sent through the plurality of transmit channels, to send the reference signals in the coherent form. Therefore, compared with the conventional reference signal sending method, the method can increase an EIRP of a reference signal obtained after coherent combination, that is, improve coverage of the reference signal, so that the probability that the signal quality of the reference signal received by the network device is poor due to the transmission limitation can be reduced. In conclusion, the signal quality of the reference signal received by the network device can be further improved by using the design.

In a possible design, sending, by the terminal device based on the first candidate signal phase difference, the fifth reference signal through the first transmit channel, and sending the sixth reference signal through the second transmit channel includes:

The terminal device sends the fifth reference signal through the first transmit channel and sends the sixth reference signal through the second transmit channel based on the first candidate signal phase difference at a time domain position corresponding to the first candidate signal phase difference. Different candidate signal phase differences correspond to different time domain positions.

According to the design, the terminal device can stagger time domain to send the reference signals by using different candidate signal phase differences.

In a possible design, a transmit power of the fifth reference signal is equal to the transmit power of the first service signal, and/or a transmit power of the sixth reference signal is equal to the transmit power of the second service signal.

According to the design, when sending the reference signals in the coherent form, the terminal device may not increase the transmit power of the reference signal, to reduce power consumption.

In a possible design, after the terminal device sends the fifth reference signal through the first transmit channel and sends the sixth reference signal through the second transmit channel based on each of the plurality of specified candidate signal phase differences, the method may further include the following steps.

The terminal device receives signal phase difference configuration information from the network device. The signal phase difference configuration information indicates the target signal phase difference, and the target signal phase difference belongs to the plurality of candidate signal phase differences. The terminal device obtains the target signal phase difference indicated by the signal phase difference configuration information. The terminal device sends a fifth service signal through the first transmit channel and sends a sixth service signal through the second transmit channel based on the target signal phase difference. A phase difference between the fifth service signal and the sixth service signal is equal to the target signal phase difference.

According to the design, after receiving the signal phase difference configuration information, the terminal device can perform phase modulation on a to-be-transmitted service signal, so that a phase difference between service signals of two adjacent transmit channels is the target signal phase difference. In this way, coherent combination can be performed on a plurality of service signals sent through the plurality of transmit channels, to form a directional beam. In addition, an EIRP of a coherent signal generated by performing coherent combination on the plurality of service signals is significantly greater than the EIRP of the signal transmitted through the single channel, and may also be greater than an EIRP of a coherent signal generated when a phase difference between the service signals is another value. Therefore, by performing this step, the service signal can obtain the maximum coherent gain in the uplink transmission direction, and coverage experience of the user can be improved.

In a possible design, the terminal device may further send a plurality of pieces of signal phase difference information to the network device. The plurality of pieces of signal phase difference information are in a one-to-one correspondence with the plurality of candidate signal phase differences. In the design, the signal phase difference configuration information includes target signal phase difference information, and the target signal phase difference information is included in the plurality of pieces of signal phase difference information. The terminal device may obtain, by performing the following steps, the target signal phase difference indicated by the signal phase difference configuration information.

The terminal device obtains the target signal phase difference information included in the signal phase difference configuration information. The terminal device obtains the target signal phase difference based on the target signal phase difference information.

According to the design, the terminal device can notify the network device of the plurality of candidate signal phase differences, so that when determining a target reference signal with highest signal quality, the network device can notify the terminal device of a target signal phase difference used to send the target reference signal.

In a possible design, any one piece of signal phase difference information includes a serial number/index of a candidate signal phase difference or indication information of a candidate codebook corresponding to a candidate signal phase difference.

In a possible design, the signal phase difference configuration information includes target time domain position information. The terminal device obtains, by performing the following steps, the target signal phase difference indicated by the signal phase difference configuration information.

The terminal device obtains the target time domain position information included in the signal phase difference configuration information. The terminal device obtains a target time domain position indicated by the target time domain position information. The terminal device obtains a candidate signal phase difference corresponding to the target time domain position, and uses the obtained candidate signal phase difference as the target signal phase difference.

According to the design, when determining a target reference signal with highest signal quality, the network device can notify the terminal device of target time domain position information of the reference signal, so that the terminal device can determine the target signal phase difference based on the target time domain position.

In a possible design, the terminal device may read a plurality of stored candidate codebooks, and obtain the plurality of candidate signal phase differences corresponding to the plurality of candidate codebooks.

According to a second aspect, an embodiment of this application provides a reference signal sending method. The method is applicable to a terminal device having a multi-transmit capability. The terminal device has a plurality of transmit channels, including a first transmit channel and a second transmit channel. The method includes the following steps.

The terminal device sends a first reference signal through the first transmit channel and sends a second reference signal through the second transmit channel based on each of a plurality of specified candidate signal phase differences. When the terminal device sends the first reference signal through the first transmit channel and sends the second reference signal through the second transmit channel based on a first candidate signal phase difference, a phase difference between the first reference signal and the second reference signal is equal to the first candidate signal phase difference. The first candidate signal phase difference is any one of the plurality of candidate signal phase differences.

According to the method, the terminal device can send reference signals in a coherent form. Compared with an EIRP of a signal transmitted through a single channel, an EIRP of a coherent signal obtained after beam combination is significantly enhanced. Therefore, the terminal device may perform phase modulation on the reference signals sent through the plurality of transmit channels, to send the reference signals in the coherent form. Therefore, compared with the conventional reference signal sending method, the method can increase an EIRP of a reference signal obtained after coherent combination, that is, improve coverage of the reference signal, so that a probability that signal quality of the reference signal received by a network device is poor due to a transmission limitation can be reduced. In conclusion, the signal quality of the reference signal received by the network device can be further improved by using the design.

In a possible design, that the terminal device sends the first reference signal through the first transmit channel and sends the second reference signal through the second transmit channel based on a first candidate signal phase difference includes:

The terminal device sends the first reference signal through the first transmit channel and sends the second reference signal through the second transmit channel based on the first candidate signal phase difference at a time domain position corresponding to the first candidate signal phase difference. Different candidate signal phase differences correspond to different time domain positions.

According to the design, the terminal device can stagger time domain to send the reference signals by using different candidate signal phase differences.

In a possible design, the terminal device and a network device need to agree on a time domain position corresponding to each candidate signal phase difference, so that the network device can receive, at an accurate time domain position, a reference signal sent based on a corresponding candidate signal phase difference. Optionally, the time domain position set for each candidate signal phase difference may be specified in a protocol, or may be configured by the network device for the terminal device, or may be configured by the terminal device and notified to the network device. An agreement form and method are not limited in this application.

In a possible design, a transmit power of the first reference signal is equal to a transmit power of a first service signal sent through the first transmit channel, and/or a transmit power of the second reference signal is equal to a transmit power of a second service signal sent through the second transmit channel.

According to the design, when sending the reference signals in the coherent form, the terminal device may not increase the transmit power of the reference signal, to reduce power consumption.

In a possible design, that the terminal device sends a first reference signal through the first transmit channel and sends a second reference signal through the second transmit channel based on each of a plurality of specified candidate signal phase differences includes: When signal quality of a signal received by the terminal device from the network device deteriorates, or when signal quality of a signal received by the terminal device from the network device at a current moment is less than a specified threshold, the terminal device sends the first reference signal through the first transmit channel and sends the second reference signal through the second transmit channel based on each of the plurality of candidate signal phase differences.

According to the design, the terminal device can adaptively send the reference signals in the coherent form in a scenario in which a network environment is poor and the signal quality of the reference signal received by the network device is poor.

In a possible design, before the terminal device sends the first reference signal through the first transmit channel and sends the second reference signal through the second transmit channel based on each of the plurality of specified candidate signal phase differences, the terminal device may further perform the following steps:
The terminal device sends a third reference signal through the first transmit channel, and sends a fourth reference signal through the second transmit channel. A transmit power of the third reference signal is equal to the transmit power of the first service signal, a transmit power of the fourth reference signal is equal to the transmit power of the second service signal, and a phase difference between the third reference signal and the fourth reference signal is 0. The terminal device receives a negative acknowledgment response of the third reference signal and/or a negative acknowledgment response of the fourth reference signal from the network device, or receives no acknowledgment response of the third reference signal and/or acknowledgment response of the fourth reference signal from the network device, or receives no codebook configuration information from the network device.

Alternatively, the terminal device receives a transmission indication sent by the network device. The transmission indication indicates the terminal device to send the reference signals in the coherent form.

According to the design, the terminal device can increase the transmit power of the reference signal when receiving no valid codebook configuration information or based on an indication of the network device.

In a possible design, after the terminal device sends the first reference signal through the first transmit channel and sends the second reference signal through the second transmit channel based on each of the plurality of specified candidate signal phase differences, the method may further include the following steps.

The terminal device receives signal phase difference configuration information from the network device. The signal phase difference configuration information indicates a target signal phase difference, and the target signal phase difference belongs to the plurality of candidate signal phase differences. The terminal device obtains the target signal phase difference indicated by the signal phase difference configuration information. The terminal device sends a third service signal through the first transmit channel and sends a fourth service signal through the second transmit channel based on the target signal phase difference. A phase difference between the third service signal and the fourth service signal is equal to the target signal phase difference.

According to the design, after receiving the signal phase difference configuration information, the terminal device can perform phase modulation on a to-be-transmitted service signal, so that a phase difference between service signals of two adjacent transmit channels is the target signal phase difference. In this way, coherent combination can be performed on a plurality of service signals sent through the plurality of transmit channels, to form a directional beam. In addition, an EIRP of a coherent signal generated by performing coherent combination on the plurality of service signals is significantly greater than the EIRP of the signal transmitted through the single channel, and may also be greater than an EIRP of a coherent signal generated when a phase difference between the service signals is another value. Therefore, by performing this step, the service signal can obtain a maximum coherent gain in an uplink transmission direction, and coverage experience of a user can be improved.

In a possible design, the terminal device may further send a plurality of pieces of signal phase difference information to the network device. The plurality of pieces of signal phase difference information are in a one-to-one correspondence with the plurality of candidate signal phase differences. In the design, the signal phase difference configuration information includes target signal phase difference information, and the target signal phase difference information belongs to the plurality of pieces of signal phase difference information. The terminal device may obtain, by performing the following steps, the target signal phase difference indicated by the signal phase difference configuration information.

The terminal device obtains the target signal phase difference information included in the signal phase difference configuration information. The terminal device obtains the target signal phase difference based on the target signal phase difference information.

According to the design, the terminal device can notify the network device of the plurality of candidate signal phase differences, so that when determining a target reference signal with highest signal quality, the network device can notify the terminal device of a target signal phase difference used to send the target reference signal.

In a possible design, any one piece of signal phase difference information includes a serial number/index of a candidate signal phase difference or indication information of a candidate codebook corresponding to a candidate signal phase difference.

In a possible design, the signal phase difference configuration information includes target time domain position information. The terminal device obtains, by performing the following steps, the target signal phase difference indicated by the signal phase difference configuration information.

The terminal device obtains the target time domain position information included in the signal phase difference configuration information. The terminal device obtains a target time domain position indicated by the target time domain position information. The terminal device obtains a candidate signal phase difference corresponding to the target time domain position, and uses the obtained candidate signal phase difference as the target signal phase difference.

According to the design, when determining a target reference signal with highest signal quality, the network device can notify the terminal device of target time domain position information of the reference signal, so that the terminal device can determine the target signal phase difference based on the target time domain position.

In a possible design, the terminal device may read a plurality of stored candidate codebooks, and obtain the plurality of candidate signal phase differences corresponding to the plurality of candidate codebooks.

According to a third aspect, an embodiment of this application provides a reference signal receiving method. The method is applicable to a network device. The method includes the following steps.

The network device receives reference signals from a terminal device at a plurality of time domain positions. Reference signals received at different time domain positions are sent by the terminal device by using different candidate signal phase differences.

In a possible design, after receiving the reference signals from the terminal device, the network device may further perform the following steps.

The network device detects signal quality of a reference signal received in each time domain. The network device determines a target reference signal with highest signal quality from the reference signals received at the plurality of time domain positions. The network device generates signal phase difference configuration information based on the target reference signal. The signal phase difference configuration information indicates a target signal phase difference used to send the target reference signal. The network device sends the signal phase difference configuration information to the terminal device.

According to the design, the network device can notify the terminal device of the target signal phase difference used by the target reference signal with the highest signal quality, so that the terminal device can send service signals in a coherent form by using the target signal phase difference, to ensure transmission quality of the service signal.

In a possible design, the network device may further receive a plurality of pieces of signal phase difference information from the terminal device. The plurality of pieces of signal phase difference information are in a one-to-one correspondence with a plurality of candidate phase differences used by the terminal device. In the design, the network device generates, by performing the following steps, the signal phase difference configuration information based on the target reference signal, including:

The network device obtains, based on a target time domain position at which the target reference signal is received and a stored correspondence between the signal phase difference information and the time domain positions, target signal phase difference information corresponding to the target time domain position. The network device generates the signal phase difference configuration information that includes the target signal phase difference information.

According to the design, the network device can determine the target signal phase difference information based on the target time domain position at which the target reference signal is received, to notify the terminal device of the target signal phase difference information.

In a possible design, any one piece of signal phase difference information includes a serial number/index of a candidate signal phase difference or indication information of a candidate codebook corresponding to a candidate signal phase difference.

In a possible design, the network device generates, by performing the following steps, the signal phase difference configuration information based on the target reference signal.

The network device generates the signal phase difference configuration information based on a target time domain position at which the target reference signal is received. The signal phase difference configuration information includes time domain position information that indicates the target time domain position.

According to the design, the network device can notify the terminal device of the target time domain position at which the target reference signal is received, so that the terminal device can determine the target signal phase difference based on the target time domain position.

According to a fourth aspect, an embodiment of this application provides a communication apparatus, including a unit configured to perform the step in any one of the foregoing aspects.

According to a fifth aspect, an embodiment of this application provides a communication device, including at least one processing element and at least one storage element. The at least one storage element is configured to store a program and data, and the at least one processing element is configured to perform the method according to any one of the foregoing aspects of this application.

According to a sixth aspect, an embodiment of this application further provides a communication system, including a terminal device configured to perform the method according to the first aspect of this application and a network device.

According to a seventh aspect, an embodiment of this application further provides a communication system, including a terminal device configured to perform the method according to the second aspect of this application and a network device configured to perform the method according to the third aspect of this application.

According to an eighth aspect, an embodiment of this application further provides a computer program. When the computer program is run on a computer, the computer is enabled to perform the method according to any one of the foregoing aspects.

According to a ninth aspect, an embodiment of this application further provides a computer storage medium. The computer storage medium stores a computer program. When the computer program is executed by a computer, the computer is enabled to perform the method according to any one of the foregoing aspects.

According to a tenth aspect, an embodiment of this application further provides a chip. The chip is configured to read a computer program stored in a memory, to perform the method according to any one of the foregoing aspects.

According to an eleventh aspect, an embodiment of this application further provides a chip system. The chip system includes a processor, configured to support a computer apparatus in implementing the method according to any one of the foregoing aspects.

In a possible design, the chip system further includes a memory. The memory is configured to store a program and data that are necessary for the computer apparatus. The chip system may include a chip, or may include a chip and another discrete component.

## BRIEF DESCRIPTION OF DRAWINGS

FIG. 1 A is a diagram of an architecture of a communication system according to an embodiment of this application;
FIG. 1B is a schematic diagram of a structure of a wireless transmission system of a terminal device according to an embodiment of this application;
FIG. 1C is a schematic diagram of an uplink dual-transmit beamforming system according to an embodiment of this application;
FIG. 2 is a flowchart of a reference signal sending method according to an embodiment of this application;
FIG. 3 is a flowchart of another reference signal sending method according to an embodiment of this application;
FIG. 4 is a schematic diagram of an uplink dual-transmit beamforming system for sending a reference signal according to an embodiment of this application;
FIG. 5 is a schematic diagram of comparison between EIRPs of reference signals sent by using different reference signal sending methods according to an embodiment of this application;
FIG. 6 is a schematic diagram of an application scenario of a reference signal sending instance according to an embodiment of this application;
FIG. 7 is a flowchart of a reference signal sending instance according to an embodiment of this application;
FIG. 8 is a diagram of a structure of a communication apparatus according to an embodiment of this application; and
FIG. 9 is a diagram of a structure of a communication device according to an embodiment of this application.

## DESCRIPTION OF EMBODIMENTS

This application provides a reference signal sending method and an apparatus, to resolve a problem that signal quality of a reference signal sent by a terminal device is poor due to a transmission limitation. The method and the apparatus are based on a same technical concept. Because a problem-resolving principle of the method is similar to a problem-resolving principle of the apparatus, for implementations of the apparatus and the method, refer to each other. No repeated description is provided.

In the solutions provided in embodiments of this application, a terminal device having a multi-transmit capability in a communication system may increase a transmit power for sending a reference signal, or send reference signals in a coherent form. According to the solutions, coverage of the reference signal can be improved, and a probability that the signal quality of the reference signal received by a network device is poor due to a transmission limitation can be reduced, that is, the signal quality of the reference signal received by the network device is improved. Finally, it is ensured that the communication system can obtain a maximum coherent gain in an uplink transmission direction, and coverage experience of a user is improved.

The following explains and describes some terms in this application, to help a person skilled in the art have a better understanding.

(1) A network device is a device that connects a terminal device to a wireless network and that is in a communication system. As a node in a radio access network, the network device may be a base station, a radio access network (radio access network, RAN) node (or device), or the like, or may be an access point (access point, AP).

Currently, some examples of the network device are a gNB, a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete spectrum aggregation (Enterprise LTE Discrete Spectrum Aggregation, eLTE-DSA) base station, and the like.

In addition, in a network structure, the network device may include a centralized unit (centralized unit, CU) node and a distributed unit (distributed unit, DU) node. In this structure, protocol layers of an eNB in a long term evolution (long term evolution, LTE) system are split. Functions of some protocol layers are controlled by the CU in a centralized manner, and functions of some or all of remaining protocol layers are distributed in the DtJ, and the CU controls the DU in the centralized manner.

(2) A terminal device is a device that provides voice and/or data connectivity for a user. The terminal device may also be referred to as user equipment (user equipment, UE), a mobile station (mobile station, MS), a mobile terminal (mobile terminal, MT), or the like.

For example, the terminal device may be a handheld device having a wireless connection function, various vehicle-mounted devices, or a road side unit. Currently, some examples of the terminal device are a mobile phone (mobile phone), a tablet computer, a notebook computer, a palmtop computer, a mobile internet device (mobile internet device, MID), an intelligent point of sale (point of sale, POS), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electrical meter, or a smart gas meter), eLTE-DSA UE, a device having an integrated access and backhaul (integrated access and backhaul, IAB) capability, a vehicle-mounted electronic control unit (electronic control unit, ECU), a vehicle-mounted computer, an in-vehicle cruise system, a telematics box (telematics box, T-Box), and the like.

(3) A reference signal (reference signal, RS) is a type of known signal that is used for channel estimation, channel sounding, and beam management and that is sent by a transmit end to a receive end.

A reference signal in embodiments of this application is an uplink reference signal sent by a terminal device to a network device. For example, the uplink reference signal may be specifically a sounding reference signal (sounding reference signal, SRS) or a demodulation reference signal (demodulation reference signal, DMRS).

It should be noted that the transmit end may send the reference signal once within a reference signal sending periodicity. The reference signal sending periodicity may be one or two radio frames (frames). A terminal device having a multi-transmit capability may send reference signals at the same time through a plurality of transmit channels at a same moment within one reference signal sending periodicity, or may send reference signals through a plurality of transmit channels at different moments within one reference signal sending periodicity.

In addition, reference signals sent by the terminal device within different reference signal sending periodicities may be the same or different. In addition, reference signals sent by the terminal device having the multi-transmit capability through different transmit channels within one reference signal sending periodicity may be the same or different.

In the following embodiments, to facilitate distinguishing between reference signals sent through different transmit channels within a same reference signal sending periodicity and reference signals sent within different reference signal sending periodicities, different names of the reference signals may be used. However, sequences of the reference signals with the different names may be the same. This is not limited in this application.

(4) A service signal is a signal that carries specific data such as user plane data, signaling, and a message. A transmit end may send the data to a receive end by using the service signal, to implement some services of the transmit end and/or the receive end.

(5) A transmit channel is used by a transmit end to send a signal. In embodiments of this application, a terminal device having a multi-transmit capability has a plurality of transmit channels. Each transmit channel includes an antenna and at least one of the following components: a power amplifier (power amplifier, PA), a band-pass filter, a signal amplifier, a frequency mixer, a digital-to-analog converter (digital-to-analog converter, DAC), and a digital front end (digital front end, DFE). In some possible embodiments, different transmit channels may share one or more of the power amplifier (power amplifier, PA), the band-pass filter, the signal amplifier, the frequency mixer, the digital-to-analog converter (digital-to-analog converter, DAC), the digital front end (digital front end, DFE), and the antenna. In some possible embodiments, each transmit channel has one or more of an independent shared power amplifier (power amplifier, PA), band-pass filter, signal amplifier, frequency mixer, digital-to-analog converter (digital-to-analog converter, DAC), digital front end (digital front end, DFE), and antenna.

(6) A total transmit power of a terminal device is a maximum transmit power allowed by the terminal device, namely, a maximum threshold of a sum of transmit powers of signals transmitted by the terminal device through all transmit channels at a same moment. In other words, a sum of transmit powers of signals transmitted by the terminal device through all the transmit channels at each moment is less than or equal to the total transmit power of the terminal device.

(7) The term "and/or" describes an association relationship between associated objects and indicates that three relationships may exist. For example, A and/or B may indicate the following three cases: Only A exists, both A and B exist, and only B exists. The character "/" generally indicates an "or" relationship between associated objects.

It should be noted that "a plurality of" in this application means two or more, and "at least one" means one or more.

In addition, it should be understood that, in descriptions of this application, terms such as "first" and "second" are merely used for purposes of distinguishing descriptions, but should not be understood as indicating or implying relative importance, or should not be understood as indicating or implying a sequence.

The following describes embodiments of this application in detail with reference to the accompanying drawings.

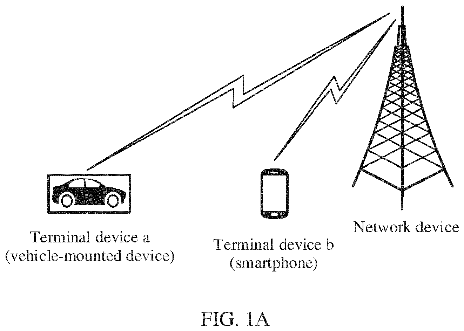

FIG. 1A shows a structure of a communication system to which a method provided in embodiments of this application is applicable. Refer to FIG. 1A. The communication system includes a network device and a terminal device (for example, a terminal device a or a terminal device b shown in FIG. 1A).

The network device is an entity that can receive and transmit radio signals on a network side, and is responsible for providing a radio access-related service for a terminal device located in coverage of the network device, and implementing a physical layer function, a resource scheduling and radio resource management function, a quality of service (Quality of Service, QoS) management function, a radio access control function, and a mobility management function. For example, the network device may be a base station, or may be another network device (for example, an AP). This is not limited in this embodiment of this application.

The terminal device is an entity that can receive and transmit radio signals on a user side, and needs to access a network by using the network device. The terminal device may be various devices that provide voice and/or data connectivity for a user. For example, as shown in FIG. 1A, the terminal device may be a vehicle-mounted device or a smartphone.

The terminal device has a multi-transmit capability, and can transmit the signals through a plurality of transmit channels. In addition, the terminal device may significantly increase uplink coverage by using a beamforming technology. Certainly, the terminal device may also have a multi-receive capability, that is, can receive the signals through the plurality of receiving channels.

In addition, the network device may also have a multi-transmit capability and/or a multi-receive capability. When the terminal device and the network device have the multi-transmit capabilities and the multi-receiving capabilities, the communication system may also be referred to as a multiple-input multiple-output (multiple-input multiple-output, MIMO) system.

In addition, the terminal device may establish a connection to one network device to form a single-connectivity communication system, or may establish connections to two network devices to form a dual-connectivity (dual connectivity, DC) communication system.

It should be further noted that the communication system shown in FIG. 1A is used as an example, and constitutes no limitation on the communication system to which the method provided in embodiments of this application is applicable. In conclusion, the method provided in embodiments of this application is applicable to a communication system and an application scenario in which various terminal devices support the multi-transmit capability. To be specific, embodiments of this application may be alternatively applied to communication systems of various types and standards, for example, a 5th generation (5th Generation, 5G) communication system, a long term evolution (Long Term Evolution, LTE) communication system, a Wi-Fi system, a vehicle-to-everything (vehicle-to-everything, V2X) communication system, a long term evolution-vehicle (LTE-vehicle, LTE-V) communication system, a vehicle-to-vehicle (vehicle-to-vehicle, V2V) communication system, an Internet of Vehicles, a machine type communication (Machine Type Communication, MTC) system, an Internet of Things (internet of things, IoT), a long term evolution-machine to machine (LTE-machine to machine, LTE-M) communication system, a machine to machine (machine to machine, M2M) communication system, an enterprise LTE discrete spectrum aggregation (enterprise LTE discrete spectrum aggregation, eLTE-DSA) system, and the like. This is not limited in this embodiment of this application.

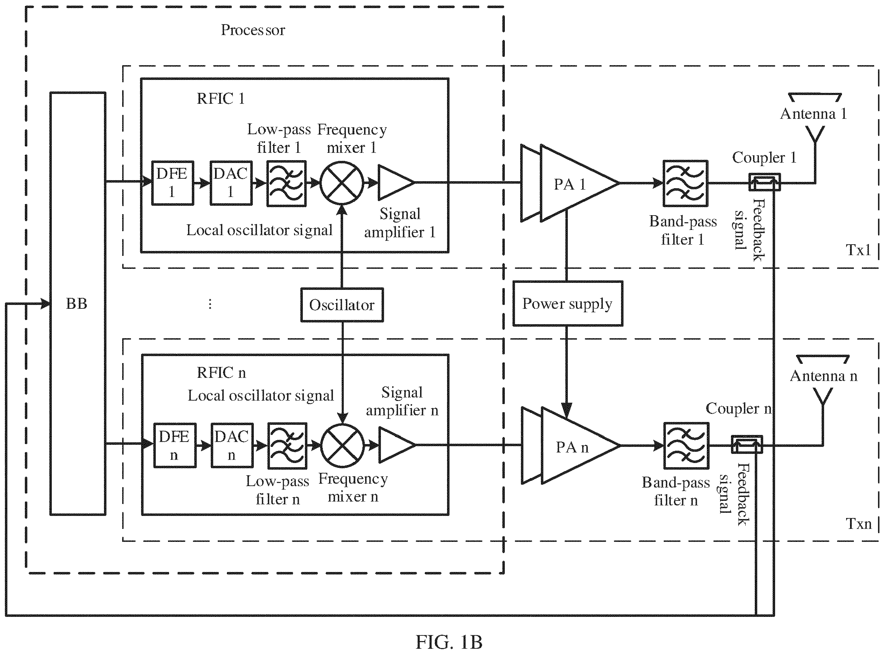

FIG. 1B is a block diagram of a structure of a wireless transmission system of a terminal device according to an embodiment of this application. Refer to FIG. 1B. The radio transmission system may include a processor, a power amplifier (Power Amplifier, PA), a band-pass filter, a coupler, and an antenna.

The processor may include one or more processing units. For example, the processor may include an application processor (application processor, AP), a modem processor, a graphics processing unit (graphics processing unit, GPU), an image signal processor (image signal processor, ISP), a neural-network processing unit (neural-network processing unit, NPU), a controller, a video codec, a digital signal processor (digital signal processor, DSP), and a controller. The controller may generate an operation control signal based on instruction operation code and a time sequence signal, to complete control of instruction reading and instruction execution.

A memory may be further disposed in the processor, and is configured to store instructions and data. In some embodiments, the memory in the processor is a cache. The memory may store instructions or data just used or cyclically used by the processor. If the processor needs to use the instructions or the data again, the processor may directly invoke the instructions or the data from the memory. By disposing the memory, the processor can be prevented from repeating an access operation. This reduces a waiting time of the processor, thereby improving system efficiency. In some embodiments, a memory may be alternatively disposed outside the processor and coupled to the processor.

In addition, the processor in this embodiment of this application may include a baseband (baseband, BB) and/or a radio frequency integrated circuit (radio frequency integrated circuit, RFIC).

The baseband is configured to synthesize a to-be-transmitted baseband signal or/and decode a received baseband signal. Specifically, during transmission, the baseband encodes a voice signal or another data signal into a baseband signal (baseband code) for transmission, and during receiving, the baseband decodes the received baseband signal (baseband code) into a voice signal or another data signal. The baseband may include components such as an encoder, a decoder, and a baseband processor. The encoder is configured to synthesize the to-be-transmitted baseband signal, and the decoder is configured to decode the received baseband signal. The baseband processor may be a microprocessor (MCU). The baseband processor may be configured to control the encoder and the decoder. For example, the baseband processor may be configured to complete scheduling of encoding and decoding, communication between the encoder and the decoder, and peripheral driving (may send an enable signal to a component other than the baseband to enable the component other than the baseband).

The radio frequency integrated circuit is configured to: process a baseband signal to form a radio frequency signal, and transfer the radio frequency signal to the power amplifier for amplification. In addition, the radio frequency integrated circuit may be further configured to: process a received radio frequency signal to form a baseband signal, and send the formed baseband signal to the baseband for decoding. The radio frequency signal is an electric wave signal that has a specific transmit frequency and that is modulated. For example, as shown in the figure, the radio frequency integrated circuit may include the following components: a DFE, a DAC, a low-pass filter, a frequency mixer, and a signal amplifier. In addition, each radio frequency integrated circuit may further include an oscillator, or a plurality of radio frequency integrated circuits may share a same oscillator to receive a local oscillator signal of the same oscillator.

The processor may perform frequency modulation on a signal based on a mobile communication technology or a wireless communication technology. The mobile communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), an emerging wireless communication technology (which may also be referred to as a 5th generation mobile communication technology, English: 5th generation mobile network or 5th generation wireless system, 5th-Generation, or 5th-Generation New Radio, 5G, 5G technology, or 5G NR for short), or the like. The wireless communication technology may include a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like.

The processor may include at least one baseband and at least one radio frequency integrated circuit. In some embodiments, each baseband corresponds to one radio frequency integrated circuit, to perform frequency modulation on a signal based on one or more communication technologies. For example, a first baseband and a first radio frequency integrated circuit perform frequency modulation on a signal based on the 5G technology, a second baseband and a second radio frequency integrated circuit perform frequency modulation on a signal based on a 4G technology, a third baseband and a third radio frequency integrated circuit perform frequency modulation on a signal based on the Wi-Fi technology, and a fourth baseband and a fourth radio frequency integrated circuit perform frequency modulation on a signal based on the Bluetooth technology. For another example, a first baseband and a first radio frequency integrated circuit may perform frequency modulation on a signal based on both a 4G technology and the 5G technology, and a second baseband and a second radio frequency integrated circuit may perform frequency modulation on a signal based on the Wi-Fi technology. In some embodiments, one baseband may alternatively correspond to a plurality of radio frequency integrated circuits, to improve integration, as shown in FIG. 1B.

In some embodiments, the baseband, the radio frequency integrated circuit, and another component in the processor may be integrated into one integrated circuit. In some embodiments, the baseband and the radio frequency integrated circuit each may be an independent component independent of the processor. In some embodiments, one baseband and at least one radio frequency integrated circuit corresponding to the baseband may be integrated into a component independent of the processor 100. In some embodiments, the baseband and the radio frequency integrated circuit are integrated into different integrated circuits, and the baseband and the radio frequency integrated circuit are packaged together, for example, packaged into a system on a chip (System on a Chip, SOC for short).

In the processor, different processing units may be independent components, or may be integrated into one or more integrated circuits.

The antenna is configured to transmit and receive electromagnetic wave signals (radio frequency signals). The terminal device may include a plurality of antennas, and each antenna may be configured to cover one or more communication frequency bands. The plurality of antennas each may be one or more of a multi-band antenna, an array antenna, or an on-chip (on-chip) antenna.

The processor is coupled to the antenna, to implement various functions related to transmission and receiving of the radio frequency signal. For example, in a signal transmission process of the terminal device, the baseband synthesizes to-be-transmitted data (a digital signal) into a to-be-transmitted baseband signal. The baseband signal is converted by the radio frequency integrated circuit into a radio frequency signal. The radio frequency signal is amplified by the power amplifier, filtered by the band-pass filter, and processed by the coupler, and finally transmitted through the antenna.

As shown in FIG. 1B, a baseband signal generated by the baseband is processed by the radio frequency integrated circuit and the power amplifier, filtered by the band-pass filter, and processed by the coupler and the like, to generate a radio frequency signal that needs to be finally transmitted. A path that finally passes through an antenna and is transmitted may be referred to as a transmit channel (Transmit, Tx). In this embodiment of this application, the terminal device has a multi-transmit capability. Therefore, as shown in the figure, the terminal device has a plurality of transmit channels (Tx1 to Txn), for example, two transmit channels, four transmit channels, or eight transmit channels. For example, when the terminal device has a dual-transmit capability, the wireless transmission system includes two transmit channels.

Optionally, as shown in the figure, power amplifiers in different transmit channels may be powered by using one power supply. Certainly, power amplifiers in different transmit channels may be alternatively powered by using different power supplies.

It should be further noted that, in the foregoing radio transmission system, the baseband may manage and adjust a working parameter of the baseband and a working parameter of another component in the system. Specifically, the baseband may have a plurality of pins, configured to respectively connect to corresponding pins of other components, so as to implement purposes of sending a control signal to these components and adjusting working parameters of these components.

For example, the baseband may adjust the working parameter of the baseband, to increase a transmit power of a baseband signal generated by the baseband, so as to increase a transmit power of the terminal device. For another example, the baseband may adjust working parameters of a DFE and a signal amplifier in a radio frequency integrated circuit in any transmit channel, to increase a transmit power of a radio frequency signal sent by the radio frequency integrated circuit, so as to increase a transmit power of the transmit channel. For still another example, the baseband may adjust a working parameter of a power amplifier in any transmit channel, or adjust a voltage of a power supply that powers the power amplifier in the transmit channel, to increase a transmit power of a radio frequency signal finally transmitted through the antenna, so as to increase a transmit power of the transmit channel. To be specific, the baseband may have pins connected to a DFE, a signal amplifier, a power amplifier, and a power supply in each transmit channel. Correspondingly, the DFE, the signal amplifier, the power amplifier, and the power supply in each transmit channel each also have a pin connected to the baseband.

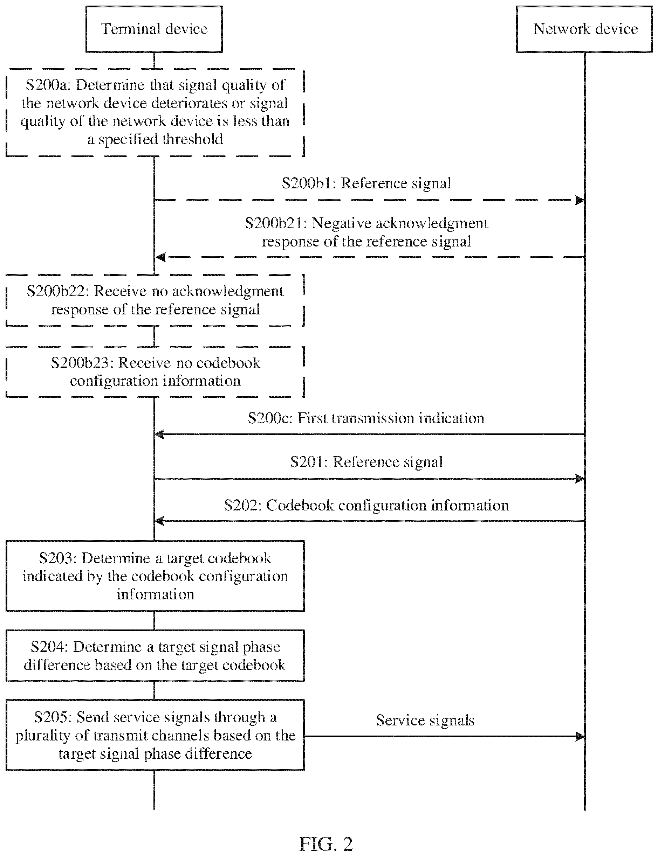

When the terminal device implements a method provided in the following embodiment shown in FIG. 2, when the baseband determines that a transmit power of a reference signal needs to be increased, the baseband may adjust the working parameter of the baseband, and/or send a first control signal to at least one of the following components in each transmit channel to change a working parameter of the at least one component: the DFE, the signal amplifier, the power amplifier, and the power supply, so as to finally increase a transmit power of sending the reference signal through the transmit channel.

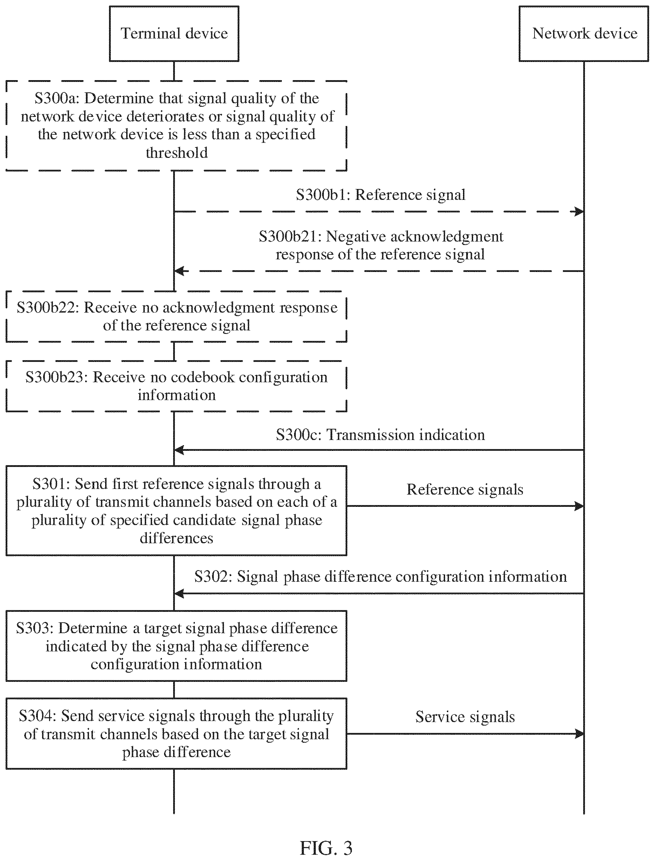

Similarly, when the terminal device implements a method provided in the following embodiment shown in FIG. 3, or sends service signals in a coherent form, the baseband may send a second control signal to a phase modulation-related component in each transmit channel, to change a working parameter of the phase modulation-related component, so that a signal phase difference between signals sent through two adjacent transmit channels is a specified signal phase difference, and finally the terminal device sends the signals in the coherent form.

In some other embodiments of this application, the terminal device may include more or fewer components than those shown in the figure, some components may be combined, some components may be split, or there may be a different component layout. The components shown in the figure may be implemented by hardware, software, or a combination of software and hardware.

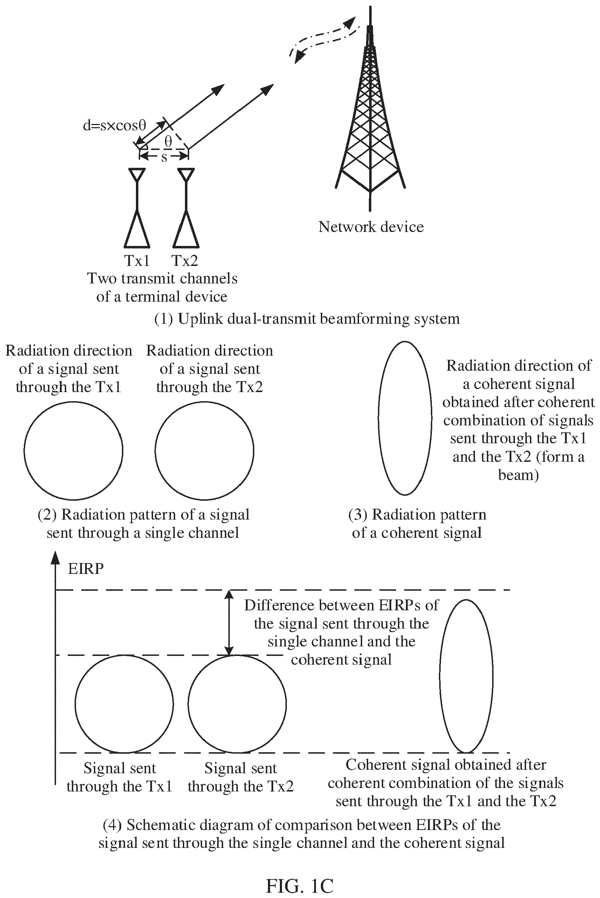

In the communication system shown in FIG. 1A, the terminal device having the multi-transmit capability may significantly increase the uplink coverage by using the beamforming technology. The following uses, for description, an example of an uplink dual-transmit beamforming system including a terminal device having a dual-transmit capability. Refer to FIG. 1C. To enable the uplink dual-transmit beamforming system shown in (1) in FIG. 1C to obtain a maximum signal gain in a direction of a horizontal included angle 8, the terminal device needs to determine a signal phase difference $\varphi$ between two adjacent transmit channels. In this case, signals transmitted through two transmit channels (Tx1 and Tx2) of the terminal device meet the following formula:

$$T1 = T * e^{jwt}$$

$$T2 = T * e^{jwt+\varphi}$$

T1 is a signal sent through the transmit channel Tx1, T2 is a signal sent through the transmit channel Tx2, $\varphi$ is a signal phase difference between the two channels, $\varphi = -\frac{2\pi d}{\lambda}$, and $\lambda$ is a signal wavelength.

As shown in (2) in FIG. 1C, when the terminal device sends a signal through a single channel, the signal may be transmitted in all directions or at all angles. This transmission manner may also be referred to as an omnidirectional transmission manner.

When performing phase modulation on a to-be-transmitted signal, the terminal device sets, to the signal phase difference $\varphi$, a phase difference between signals sent through two adjacent transmit channels. In this case, coherent combination may be performed on two signals transmitted through the two transmit channels, to generate a directional coherent signal. This process may also be referred to as beam combination, and this transmission manner may be referred to as a directional transmission manner. Refer to (3) in FIG. 1C. Coherent combination may be performed on a plurality of signals to generate a directional beam.

It can be learned from (4) in FIG. 1C that, when a transmit power is the same, an effective isotropic radiated power (effective isotropic radiated power, EIRP) of the coherent signal generated after coherent combination is significantly greater than an EIRP of the signal sent through the single channel.

Currently, the terminal device needs to obtain the signal phase difference $\varphi$ by performing the following procedure.

The terminal device sends a reference signal through each transmit channel at a same time domain position (namely, a same time point). Generally, a power of a reference signal sent through each transmit channel is equal to a power for transmitting a service signal through the transmit channel. Due to a constraint of a total transmit power A of the terminal device, a sum of transmit powers of all signals sent at a same time domain position needs to be less than or equal to the total transmit power A.

The uplink dual-transmit beamforming system shown in FIG. 1C is still used as an example. Transmit powers of reference signals and service signals, that are sent through the transmit channels Tx1 and Tx2 of the terminal device in the system, are shown in Table 1 and Table 2.

**Table 1: Transmit powers of signals transmitted through the Tx1 at various time domain positions**

| Time domain position | Signal | Transmit power (dBm) |
|---|---|---|
| 0 | Service signal DS 1-0 | A1 |
| 1 | Service signal DS 1-1 | A1 |
| 2 | Service signal DS 1-2 | A1 |
| 3 | Service signal DS 1-3 | A1 |
| 4 | Service signal DS 1-4 | A1 |
| 5 | Service signal DS 1-5 | A1 |
| 6 | Service signal DS 1-6 | A1 |
| 7 | Service signal DS 1-7 | A1 |
| 8 | Service signal DS 1-8 | A1 |
| 9 | Service signal DS 1-9 | A1 |
| 10 | Service signal DS 1-10 | A1 |
| 11 | Service signal DS 1-11 | A1 |
| 12 | Service signal DS 1-12 | A1 |
| 13 | **Reference signal RS 1** | A1 |

Table 2: Transmit powers of signals transmitted through the Tx2 at various time domain positions

| Time domain position | Signal | Transmit power (dBm) |
|---|---|---|
| 0 | Service signal DS 2-0 | A2 |
| 1 | Service signal DS 2-1 | A2 |
| 2 | Service signal DS 2-2 | A2 |
| 3 | Service signal DS 2-3 | A2 |
| 4 | Service signal DS 2-4 | A2 |
| 5 | Service signal DS 2-5 | A2 |
| 6 | Service signal DS 2-6 | A2 |
| 7 | Service signal DS 2-7 | A2 |
| 8 | Service signal DS 2-8 | A2 |
| 9 | Service signal DS 2-9 | A2 |
| 10 | Service signal DS 2-10 | A2 |
| 11 | Service signal DS 2-11 | A2 |
| 12 | Service signal DS 2-12 | A2 |
| 13 | **Reference signal RS 2** | A2 |

It should be noted that a transmit power A1 of the Tx1 and a transmit power A2 of the Tx2 may be the same or different, but $A1+A2 \leq$ the total transmit power A of the terminal device. In addition, it should be further noted that time domain positions with a same number in Table 1 and Table 2 are a same time domain position.

In addition, it should be noted that time domain positions described throughout this application each may be in a time unit of a frame (frame), a subframe (subframe), a slot (slot), a symbol (symbol), or the like, or may be in a time unit of another time length. In other words, one time domain position in Table 1 and Table 2 represents one time unit. However, in each example of this application, only an example in which one time domain position is one symbol is used. To be specific, time domain positions 0 to 13 in Table 1 and tables in the following examples are 14 symbols in one subframe. However, each example constitutes no limitation on the time domain position. For example, one time domain position may be alternatively one slot.

It can be learned from the foregoing descriptions that a reference signal is transmitted by the terminal device through a single transmit channel in the omnidirectional transmission manner. Therefore, an EIRP of the reference signal is lower compared with an EIRP of a coherent signal. Further, because a transmission environment is complex and changeable, when the reference signal undergoes some transmission limitations, quality of the reference signal received by a network device is poor. Based on the foregoing reasons, it can be learned that the network device may not accurately detect amplitude and a phase of the reference signal. As a result, the network device cannot determine an optimal codebook, and the terminal device cannot obtain an accurate signal phase difference $\varphi$ by using the optimal codebook. Consequently, the uplink dual-transmit beamforming system cannot obtain a maximum coherent gain.

To resolve the foregoing problem, improve signal quality of a reference signal received by a network device, and finally ensure that a communication system can obtain a maximum coherent gain in an uplink transmission direction, an embodiment of this application provides a reference signal sending method. The method is applicable to the communication system shown in FIG. 1A. In addition, a wireless transmission system in a terminal device in this embodiment of this application may be shown in FIG. 1B. The following describes the method provided in this embodiment of this application with reference to a flowchart shown in FIG. 2.

S201: The terminal device sends reference signals through a plurality of transmit channels. A transmit power of a reference signal sent through at least one transmit channel is greater than a transmit power of a service signal sent through the transmit channel.

In this embodiment of this application, an example in which the plurality of transmit channels include a first transmit channel and a second transmit channel is used for description. Therefore, in step S201, the terminal device sends a first reference signal through the first transmit channel, and sends a second reference signal through the second transmit channel. A transmit power of the first reference signal is greater than a transmit power of a first service signal sent through the first transmit channel, and/or a transmit power of the second reference signal is greater than a transmit power of a second service signal sent through the second transmit channel.

The terminal device may perform S201 within one reference signal sending periodicity. For example, a reference signal sending periodicity may be one or two radio frames.

When it is assumed that a path loss of a service signal and a path loss of the reference signal in a transmission medium (for example, air) are the same, by performing the step, compared with that of the service signal, a transmit power for sending the reference signal is increased by the terminal device. This can improve coverage of the reference signal, increase the receive power of the reference signal received by the network device, and reduce a probability that the signal quality of the reference signal received by the network device is poor due to a transmission limitation. In conclusion, by performing the step, the signal quality of the reference signal received by the network device can be improved, and finally, it is ensured that the communication system can obtain the maximum coherent gain in the uplink transmission direction.

It should be noted that, in this embodiment of this application, the terminal device may perform S201 in, but not limited to, the following two implementations.

First implementation: staggering time domain for sending

The terminal device sends a reference signal through each transmit channel at a time domain position corresponding to each transmit channel. Different transmit channels correspond to different time domain positions. A transmit power of the reference signal sent through each transmit channel is less than or equal to a total transmit power of the terminal device. For example, the terminal device sends the first reference signal through the first transmit channel at a first time domain position, and the terminal device sends the second reference signal through the second transmit channel at a second time domain position. The first time domain position is different from the second time domain position. The transmit power of the first reference signal and the transmit power of the second reference signal each are less than or equal to the total transmit power of the terminal device.

It should be noted that, when using this implementation, the terminal device sends the reference signals through one transmit channel and does not send a signal through another transmit channel at one time domain position. For example, the terminal device does not send a signal through the second transmit channel at the first time domain position, and the terminal device does not send a signal through the first transmit channel at the second time domain position.

Time domain positions corresponding to the transmit channels in this embodiment of this application each may be in a unit of a subframe (subframe), a slot (slot), a symbol (symbol), or the like. In other words, different transmit channels correspond to different subframes, slots, or symbols. However, it should be noted that the time domain positions corresponding to the plurality of transmit channels are within a same reference signal sending periodicity.

In this implementation, when the total transmit power of the terminal device is not increased, the terminal device can set different transmit channels to correspond to different time domain positions, to stagger time points at which the reference signals are sent through the transmit channels. In this way, compared with that in a conventional reference signal sending method, the terminal device can appropriately increase, within a range less than or equal to the total transmit power, the transmit power for sending the reference signal through each transmit channel.

It should be further noted that transmit powers of reference signals sent through different transmit channels may be the same or different, or transmit powers of reference signals sent through some of the plurality of transmit channels are the same. This is not limited in this embodiment of this application.

Optionally, when transmit powers for sending service signals through the transmit channels are the same, a transmit power of a reference signal sent through any transmit channel is less than or equal to m times a transmit power of a service signal sent through the transmit channel, where m is a quantity of the plurality of transmit channels. For example, when the transmit power of the first service signal sent through the first transmit channel is the same as the transmit power of the second service signal sent through the second transmit channel, the transmit power of the first reference signal is less than or equal to n times the transmit power of the first service signal, and the transmit power of the second reference signal is less than or equal to n times the transmit power of the second service signal, where n is an integer greater than or equal to 2.

Example 1: In the uplink dual-transmit beamforming system shown in FIG. 1C, transmit powers of reference signals and service signals, that are sent through the transmit channels Tx1 and Tx2 of the terminal device, may be shown in Table 3 and Table 4.

**Table 3: Transmit powers of signals transmitted through the Tx1 at various time domain positions**

| Time domain position | Signal | Transmit power (dBm) |
|---|---|---|
| 0 | Service signal DS 1-0 | A1 |
| 1 | Service signal DS 1-1 | A1 |

(continued)

| Time domain position | Signal | Transmit power (dBm) |
|---|---|---|
| 2 | Service signal DS 1-2 | A1 |
| 3 | Service signal DS 1-3 | A1 |
| 4 | Service signal DS 1-4 | A1 |
| 5 | Service signal DS 1-5 | A1 |
| 6 | Service signal DS 1-6 | A1 |
| 7 | Service signal DS 1-7 | A1 |
| 8 | Service signal DS 1-8 | A1 |
| 9 | Service signal DS 1-9 | A1 |
| 10 | Service signal DS 1-10 | A1 |
| 11 | Service signal DS 1-11 | A1 |
| 12 | **Reference signal RS 1-0** | A1+3 |
| 13 | **Reference signal RS 1-1** | 0 |

**Table 4: Transmit powers of signals transmitted through the Tx2 at various time domain positions**

| Time domain position | Signal | Transmit power (dBm) |
|---|---|---|
| 0 | Service signal DS 2-0 | A2 |
| 1 | Service signal DS 2-1 | A2 |
| 2 | Service signal DS 2-2 | A2 |
| 3 | Service signal DS 2-3 | A2 |
| 4 | Service signal DS 2-4 | A2 |
| 5 | Service signal DS 2-5 | A2 |
| 6 | Service signal DS 2-6 | A2 |
| 7 | Service signal DS 2-7 | A2 |
| 8 | Service signal DS 2-8 | A2 |
| 9 | Service signal DS 2-9 | A2 |
| 10 | Service signal DS 2-10 | A2 |
| 11 | Service signal DS 2-11 | A2 |
| 12 | **Reference signal RS 2-0** | 0 |
| 13 | **Reference signal RS 2-1** | A2+3 |

When values of A1 and A2 are the same, the transmit power for transmitting the reference signal through each transmit channel may be doubled compared with the transmit power for transmitting the service signal through each transmit channel. It can be learned from Table 3 and Table 4 that the reference signal is sent through the Tx1 at the time domain position 12, and the transmit power A1+3 (dBm) for transmitting the reference signal is twice the transmit power A1 (dBm) for sending the service signal; and the reference signal is sent through the Tx2 at the time domain position 13, and the transmit power A2+3 (dBm) for transmitting the reference signal is twice the transmit power A2 (dBm) for sending the service signal. In addition, it should be noted that time domain positions with a same number in Table 3 and Table 4 are a same time domain position.

It should be further noted that Table 3 and Table 4 do not limit a multiple of a transmit power increased for each transmit channel, and the multiple may not only be 2, but also be 1.5, 1.8, or the like.

Second implementation: increasing the total transmit power

The terminal device sets the total transmit power of the terminal device to a first value. The first value is greater than a second value, and the first value is a total transmit power used when the terminal device sends the reference signal. The second value is a total transmit power used when the terminal device sends the service signal. For example, when the total transmit power of the terminal device is classified into a plurality of power levels, the terminal device may increase the total transmit power of the terminal device by at least one level.

The terminal device sends the reference signals through the plurality of transmit channels based on the specified total transmit power of the terminal device. For example, the terminal device sends the first reference signal through the first transmit channel and sends the second reference signal through the second transmit channel based on the specified total transmit power of the terminal device.

In this implementation, the terminal device can increase the total transmit power when the reference signal is sent. As a result, a transmit power for sending a reference signal through each transmit channel is also correspondingly increased.

Optionally, the terminal device may send, based on the specified total transmit power of the terminal device, the first reference signal through the plurality of transmit channels in, but not limited to, the following two manners.

Manner 1: The terminal device sends the first reference signals through the plurality of transmit channels at a same time domain position based on the specified total transmit power of the terminal device. For example, the terminal device sends the first reference signal through the first transmit channel and sends the second reference signal through the second transmit channel at the same time domain position based on the specified total transmit power of the terminal device. A sum of the transmit power of the first reference signal and the transmit power of the second reference signal is less than or equal to the specified total transmit power of the terminal device.

The reference signal transmission method provided in Manner 1 is similar to the conventional reference signal sending method, and a difference lies in that the total transmit power used when the terminal device sends the reference signal is greater than the total transmit power used when the terminal device sends the service signal.

Example 2: In the uplink dual-transmit beamforming system shown in FIG. 1C, if a total transmit power used when the terminal device sends a service signal is A, the terminal device sets the total transmit power to B before sending a reference signal, where B>A. In this case, in the system, transmit powers of reference signals and service signals, that are sent through the transmit channels Tx1 and Tx2 of the terminal device, are shown in Table 5 and Table 6.

**Table 5: Transmit powers of signals transmitted through the Tx1 at various time domain positions**

| Time domain position | Signal | Transmit power (dBm) |
|---|---|---|
| 0 | Service signal DS 1-0 | A1 |
| 1 | Service signal DS 1-1 | A1 |
| 2 | Service signal DS 1-2 | A1 |
| 3 | Service signal DS 1-3 | A1 |
| 4 | Service signal DS 1-4 | A1 |
| 5 | Service signal DS 1-5 | A1 |
| 6 | Service signal DS 1-6 | A1 |
| 7 | Service signal DS 1-7 | A1 |
| 8 | Service signal DS 1-8 | A1 |
| 9 | Service signal DS 1-9 | A1 |
| 10 | Service signal DS 1-10 | A1 |
| 11 | Service signal DS 1-11 | A1 |
| 12 | Service signal DS 1-12 | A1 |
| 13 | **Reference signal RS 1** | B1 |

**Table 6: Transmit powers of signals transmitted through the Tx2 at various time domain positions**

| Time domain position | Signal | Transmit power (dBm) |
|---|---|---|
| 0 | Service signal DS 2-0 | A2 |
| 1 | Service signal DS 2-1 | A2 |
| 2 | Service signal DS 2-2 | A2 |
| 3 | Service signal DS 2-3 | A2 |
| 4 | Service signal DS 2-4 | A2 |
| 5 | Service signal DS 2-5 | A2 |
| 6 | Service signal DS 2-6 | A2 |
| 7 | Service signal DS 2-7 | A2 |
| 8 | Service signal DS 2-8 | A2 |
| 9 | Service signal DS 2-9 | A2 |
| 10 | Service signal DS 2-10 | A2 |
| 11 | Service signal DS 2-11 | A2 |
| 12 | Service signal DS 2-12 | A2 |
| 13 | **Reference signal RS 2** | B2 |

B1>A1, B2>A2, and B1+B2≤B. For example, when the total transmit power B when the terminal device sends the reference signal is doubled compared with the total transmit power A when the service signal is sent by the terminal device (that is, B=A+3), the transmit power for transmitting the reference signal through each transmit channel may be doubled compared with a transmit power for transmitting a service signal through each transmit channel, that is, B1=A1+3, and B2=A2+3. In addition, it should be noted that time domain positions with a same number in Table 5 and Table 6 are a same time domain position.

It should be further noted that, because the transmit power of the reference signal sent at the time domain position 13 is higher, interference may be caused to a nearby sent signal. Therefore, the terminal device may not send any signal at the time domain position 12.

Manner 2: The terminal device sends, based on the specified total transmit power of the terminal device, the first reference signal through each transmit channel at a time domain position that corresponds to each transmit channel. Similar to those in the first implementation, different transmit channels correspond to different time domain positions, a transmit power of a first reference signal sent through any transmit channel is less than or equal to the specified total transmit power, and time domain positions corresponding to the plurality of transmit channels of the terminal device are within a same reference signal sending periodicity. For example, the terminal device sends the first reference signal through the first transmit channel at a first time domain position and sends the second reference signal through the second transmit channel at a second time domain position based on the specified total transmit power of the terminal device. The first time domain position is different from the second time domain position. The transmit power of the first reference signal and the transmit power of the second reference signal each are less than or equal to the specified total transmit power of the terminal device.

Different from that in the first implementation, the total transmit power used when the terminal device sends the reference signal is greater than the total transmit power used when the terminal device sends the service signal.

Example 3: In the uplink dual-transmit beamforming system shown in FIG. 1C, if a total transmit power used when the terminal device sends a service signal is A, the terminal device sets the total transmit power to B before sending a reference signal, where B>A. In this case, in the system, transmit powers of reference signals and service signals, that are sent through the transmit channels Tx1 and Tx2 of the terminal device, are shown in Table 7 and Table 8.

**Table 7: Transmit powers of signals transmitted through the Tx1 at various time domain positions**

| Time domain position | Signal | Transmit power (dBm) |
|---|---|---|
| 0 | Service signal DS 1-0 | A1 |
| 1 | Service signal DS 1-1 | A1 |
| 2 | Service signal DS 1-2 | A1 |

(continued)

| Time domain position | Signal | Transmit power (dBm) |
|---|---|---|
| 3 | Service signal DS 1-3 | A1 |
| 4 | Service signal DS 1-4 | A1 |
| 5 | Service signal DS 1-5 | A1 |
| 6 | Service signal DS 1-6 | A1 |
| 7 | Service signal DS 1-7 | A1 |
| 8 | Service signal DS 1-8 | A1 |
| 9 | Service signal DS 1-9 | A1 |
| 10 | Service signal DS 1-10 | A1 |
| 11 | Service signal DS 1-11 | A1 |
| 12 | Reference signal RS 1-0 | B1 |
| 13 | Reference signal RS 1-1 | 0 |

Table 8: Transmit powers of signals transmitted through the Tx2 at various time domain positions

| Time domain position | Signal | Transmit power (dBm) |
|---|---|---|
| 0 | Service signal DS 2-0 | A2 |
| 1 | Service signal DS 2-1 | A2 |
| 2 | Service signal DS 2-2 | A2 |
| 3 | Service signal DS 2-3 | A2 |
| 4 | Service signal DS 2-4 | A2 |
| 5 | Service signal DS 2-5 | A2 |
| 6 | Service signal DS 2-6 | A2 |
| 7 | Service signal DS 2-7 | A2 |
| 8 | Service signal DS 2-8 | A2 |
| 9 | Service signal DS 2-9 | A2 |
| 10 | Service signal DS 2-10 | A2 |
| 11 | Service signal DS 2-11 | A2 |
| 12 | **Reference signal RS 2-0** | 0 |
| 13 | **Reference signal RS 2-1** | B2 |

$B \geq B1 > A1$, and $B \geq B2 > A2$. For example, when the total transmit power B when the terminal device sends the reference signal is doubled compared with the total transmit power A when the service signal is sent by the terminal device (that is, $B=A+3$), the transmit power for transmitting the reference signal through each transmit channel may also be increased by one to three times compared with a transmit power for transmitting a service signal through each transmit channel. In addition, it should be noted that time domain positions with a same number in Table 7 and Table 8 are a same time domain position.

It should be noted that, when the terminal device staggers the time points at which the reference signals are sent through the transmit channels, the terminal device and the network device need to agree on the time domain position corresponding to each transmit channel, so that the network device can receive, at an accurate time domain position, a reference signal sent through a corresponding transmit channel. Optionally, the time domain position corresponding to each transmit channel may be specified in a protocol, or may be configured by the network device for the terminal device, or may be configured by the terminal device and notified to the network device. An agreement form and method are not limited in this application.

S202: The network device receives the reference signal from the terminal device, detects amplitude and a phase of the reference signal, and determines a target codebook from a plurality of stored codebooks based on the amplitude and the phase of the reference signal. The network device sends codebook configuration information to the terminal device. The codebook configuration information indicates the target codebook. Optionally, the codebook configuration information includes indication information of the target codebook, such as a serial number and an identifier of the target codebook, or the codebook configuration information carries the target codebook. The terminal device receives the codebook configuration information from the network device.

In S201, the terminal device increases the transmit power for sending the reference signal. Therefore, the signal quality of the reference signal received by the network device is high, so that a probability that the network device accurately detects the amplitude and the phase of the reference signal can be increased, and a probability that the target codebook determined by the network device is an optimal codebook can be increased.

For example, the codebook configuration information may be carried in higher layer signaling or a message.

S203: The terminal device determines the target codebook indicated by the codebook configuration information.

In an implementation, when the codebook configuration information includes the indication information of the target codebook, the terminal device may determine the target codebook from the plurality of stored codebooks based on an indication of the target codebook in the codebook configuration information. The plurality of codebooks stored by the terminal device are the same as a plurality of codebooks stored by the network device.

In another implementation, when the codebook configuration information carries the target codebook, the terminal device may read the target codebook from the codebook configuration information.

S204: The terminal device determines a target signal phase difference based on the target codebook.

The terminal device may store a correspondence between the plurality of codebooks and a signal phase difference. In this way, the terminal device may determine, based on the target codebook, the target signal phase difference corresponding to the target codebook. In an example, the correspondence may be a calculation method for calculating a signal phase difference by using a codebook.

S205: The terminal device sends the service signals through the plurality of transmit channels based on the target signal phase difference. A phase difference between two service signals sent through two adjacent transmit channels is equal to the target signal phase difference. For example, the terminal device sends a third service signal through the first transmit channel and sends a fourth service signal through the second transmit channel based on the target signal phase difference. A phase difference between the third service signal and the fourth service signal is equal to the target signal phase difference.

In this step, a transmit power when any transmit channel sends a service signal is the same as a transmit power when the any transmit channel sends a service signal before, and does not change. When the total transmit power of the terminal device is adjusted to the first value when the first reference signal is transmitted, in this step, the total transmit power of the terminal device may be further adjusted to the second value.

For example, in the uplink dual-transmit beamforming system shown in FIG. 1C, the transmit power for transmitting the service signal through the Tx1 is still A1, and the transmit power for transmitting the service signal through the Tx2 is still A2.

By performing this step, the terminal device can perform phase modulation on a to-be-transmitted service signal, so that a phase difference between service signals of two adjacent transmit channels is the target signal phase difference. In this way, coherent combination can be performed on a plurality of service signals sent through the plurality of transmit channels, to form a directional beam, as shown in (3) in FIG. 1C. In addition, an EIRP of a coherent signal generated by performing coherent combination on the plurality of service signals is significantly greater than an EIRP of a signal transmitted through a single channel, and may also be greater than an EIRP of a coherent signal generated when a phase difference between the service signals is another value. Therefore, by performing this step, the service signal can obtain a maximum coherent gain in the uplink transmission direction, and coverage experience of a user can be improved.

It should be further noted that, in the communication system shown in FIG. 1A, each time when sending the reference signal, the terminal device may perform the reference signal sending method that is described in S201 to S205, or the terminal device performs the reference signal sending method in a specific scenario, or when a specified condition is met, the terminal device may perform the reference signal sending method that is provided in this embodiment of this application. With reference to the procedure shown in FIG. 2, the following describes a condition for performing the method provided in embodiments of this application. It should be noted that the following conditions are merely examples, and constitute no limitation on the specified conditions.

Condition 1

S200a: The terminal device determines that signal quality of the network device deteriorates, or determines that signal quality of the network device at a current moment is less than a specified threshold.

Optionally, the terminal device may determine the signal quality of the network device in, but not limited to, the following manners.

Manner 1: The terminal device may detect signal quality of a signal from the network device within a specified time period or at a specified moment. For example, the signal quality of the signal may include but is not limited to one or more of the following signal quality parameters:

a signal amplitude value, signal strength, a reference signal received power (reference signal received power, RSRP), reference signal received quality (reference signal received quality, RSRQ), a signal to noise ratio (signal to noise ratio, SNR), and a signal to interference plus noise ratio (signal to interference plus noise ratio, SINR)

Manner 2: The terminal device may detect a variation of the signal quality of the network device within a specified time period. In the manner, when a variation difference is less than a first variation threshold, it indicates that the signal quality of the network device is stable and does not deteriorate; or when a variation difference is greater than a second variation threshold, it indicates that the signal quality of the network device is unstable and may deteriorate. The second variation threshold is greater than the first variation threshold.

Manner 3: The terminal device counts a bit error rate (an uplink bit error rate, a downlink bit error rate, or a transmission bit error rate). When the bit error rate increases, it indicates that the signal quality of the network device deteriorates.

Manner 4: The terminal device determines a physical distance between the terminal device and the accessing network device. If the physical distance between the terminal device and the network device reaches a specified threshold, it indicates that the signal quality of the network device deteriorates.

Condition 2

S200b1: The terminal device sends reference signals through the plurality of transmit channels.

In a possible implementation, the terminal device may perform S200b1 by using the conventional reference signal sending method. To be specific, compared with that of the service signal, the transmit power is not adjusted when the terminal device sends the reference signal. In other words, the transmit power of the reference signal sent through each transmit channel is equal to the transmit power of the service signal sent through the transmit channel. For example, the terminal device may send a third reference signal through the first transmit channel, and send a fourth reference signal through the second transmit channel. A transmit power of the third reference signal is equal to the transmit power of the first service signal, and a transmit power of the fourth reference signal is equal to the transmit power of the second service signal.

In another possible implementation, the terminal device may perform S200b1 by using the method shown in S201. To be specific, compared with that of the service signal, a transmit power for sending a reference signal through at least one transmit channel may be increased by the terminal device. Optionally, the transmit power of the reference signal sent through the any transmit channel in S201 is greater than a transmit power of a reference signal sent through the any transmit channel in S200b1. For example, the transmit power of the first reference signal is greater than the transmit power of the third reference signal, and the transmit power of the second reference signal is greater than the transmit power of the fourth reference signal.

It should be noted that this application constitutes no limitation on a method for sending the reference signal by the terminal device in this step, and the terminal device may alternatively perform S200b1 by using another method other than the foregoing two implementations.

S200b21: The network device receives the reference signal from the terminal device, and feeds back a negative acknowledgment response of the reference signal to the terminal device when receiving fails. The terminal device receives the negative acknowledgment response of the reference signal from the network device. For example, the terminal device receives a negative acknowledgment response of the third reference signal and/or a negative acknowledgment response of the fourth reference signal from the network device.

This condition is applicable to an acknowledgment mechanism scenario in which the network device receives a signal sent by the terminal device, and feeds back an acknowledgment response to the terminal device if receiving succeeds, or feeds back a negative acknowledgment response to the terminal device if receiving fails.

Condition 3

S200b1: The terminal device sends reference signals through the plurality of transmit channels. This is the same as S200b1 in Condition 2. Details are not described herein again.

S200b22: The network device receives the reference signal from the terminal device, and does not feed back an acknowledgment response of the reference signal to the terminal device when receiving fails. The terminal device receives no acknowledgment response of the reference signal from the network device. For example, the terminal device receives no acknowledgment response of the third reference signal and/or acknowledgment response of the fourth reference signal from the network device.

This condition is applicable to an acknowledgment mechanism scenario in which the network device receives a signal sent by the terminal device, and feeds back an acknowledgment response to the terminal device if receiving succeeds, or does not feed back an acknowledgment response to the terminal device if receiving fails.

For example, in Condition 2 and Condition 3, the negative acknowledgment response may be a negative acknowledgment (negative acknowledgement, NACK), and the acknowledgment response may be an acknowledgment (acknowledgement, ACK).

Condition 4

S200b1: The terminal device sends reference signals through the plurality of transmit channels. This is the same as S200b1 in Condition 2. Details are not described herein again.

S200b23: The network device receives the reference signal from the terminal device, and when receiving fails, the network device cannot successfully detect the amplitude and the phase of the reference signal. As a result, the network device cannot determine the target codebook either, and cannot send the codebook configuration information to the terminal device. The terminal device receives no codebook configuration information from the network device.

It should be noted that, in Condition 2 to Condition 4, the reference signal sent in step S200b1 and the reference signal sent in step S201 are within different reference signal sending periodicities.

Condition 5

S200c: The terminal device receives a first transmission indication sent by the network device. The first transmission indication indicates the terminal device to increase the transmit power of the reference signal. Optionally, the network device sends the first transmission indication to the terminal device when determining that signal quality of a signal from the terminal device deteriorates, or determining that signal quality of a signal from the terminal device is less than a specified threshold, or when failing to receive the reference signal from the terminal device. For a manner in which the network device determines that signal quality of the terminal device deteriorates, refer to the manner in which the terminal device determines that the signal quality of the network device deteriorates and that is shown in Condition 1. Details are not described herein again.

Optionally, the first transmission indication may further include sending-related information of the reference signal, for example, an implementation that is used to send the reference signal, and for another example, an adjustment value of a transmit power of each transmit channel or an adjustment value of the total transmission power. When the terminal device staggers the time points at which the reference signals are sent through the transmit channels, the first transmission indication may further carry time domain position configuration information corresponding to each transmit channel.

It should be noted that, in some cases (for example, the terminal device establishes the network device at a very far distance, or is in a very-weak-coverage scenario), although the terminal device increases the transmit power of the reference signal by using the method in S201, the signal quality of the reference signal received by the network device may still be poor, and the network device cannot feed back accurate codebook configuration information. In other words, the foregoing steps S202 to S205 cannot be performed. Therefore, in some scenarios, the terminal device may repeatedly perform S201, and a transmit power of a reference signal sent this time may be greater than a transmit power of a reference signal sent last time. Alternatively, the terminal device sends the reference signal by using another reference signal sending method. For example, the terminal device may send the reference signals in a coherent form by using a reference signal sending method shown in FIG. 3. For a specific process, refer to descriptions in an embodiment shown in FIG. 3. Details are not described herein again. Similar to those in Condition 2 to Condition 5, these scenarios are as follows:

The terminal device receives a negative acknowledgment response of the first reference signal and/or a negative acknowledgment response of the second reference signal from the network device.

The terminal device receives no acknowledgment response of the first reference signal and/or acknowledgment response of the second reference signal.

The terminal device receives no codebook configuration information from the network device.

The terminal device receives a second transmission indication sent by the network device, where the second transmission indication indicates the terminal device to send the reference signals in the coherent form.

In conclusion, this embodiment of this application provides the reference signal sending method. In the method, when sending the reference signal, the terminal device increases the transmit power for sending the reference signal, so that coverage of the reference signal can be improved, and the probability that the signal quality of the reference signal received by the network device is poor due to the transmission limitation can be reduced. In addition, because the terminal device increases the transmit power of the reference signal, the signal quality of the reference signal received by the network device is high, so that the probability that the network device accurately detects the amplitude and the phase of the reference signal can be increased, and the probability that the target codebook determined by the network device is the optimal codebook can be increased. In this way, when the network device configures the target codebook for the terminal device, the terminal device can transmit the service signal based on the target signal phase difference indicated by the target codebook, so that the service signal can obtain the maximum coherent gain in the uplink transmission direction, and coverage experience of the user can be improved.

To resolve the foregoing problem, improve signal quality of a reference signal received by a network device, and finally ensure that a communication system can obtain a maximum coherent gain in an uplink transmission direction, an embodiment of this application provides a reference signal sending method. The method is applicable to the communication system shown in FIG. 1A. In addition, a wireless transmission system in a terminal device in this embodiment of this application may be shown in FIG. 1B. The following describes the method provided in this embodiment of this application with reference to a flowchart shown in FIG. 3.

S301: The terminal device separately sends first reference signals through a plurality of transmit channels based on each of a plurality of specified candidate signal phase differences. When the terminal device sends the first reference signals through the plurality of transmit channels based on a first candidate signal phase difference, a phase difference between two first reference signals sent through two adjacent transmit channels is equal to the first candidate signal phase difference. The first candidate signal phase difference is any one of the plurality of candidate signal phase differences. In this embodiment of this application, an example in which the plurality of transmit channels include a first transmit channel and a second transmit channel is used for description. Therefore, in step S301, that the terminal device sends the reference signals based on the first candidate signal phase difference specifically includes: sending a first reference signal through the first transmit channel and sending a second reference signal through the second transmit channel based on the first candidate signal phase difference. A phase difference between the first reference signal and the second reference signal is equal to the first candidate signal phase difference.

Optionally, the plurality of candidate signal phase differences may be specified in a protocol, or configured by the network device for the terminal device, or configured by the terminal device. This is not limited in this application.

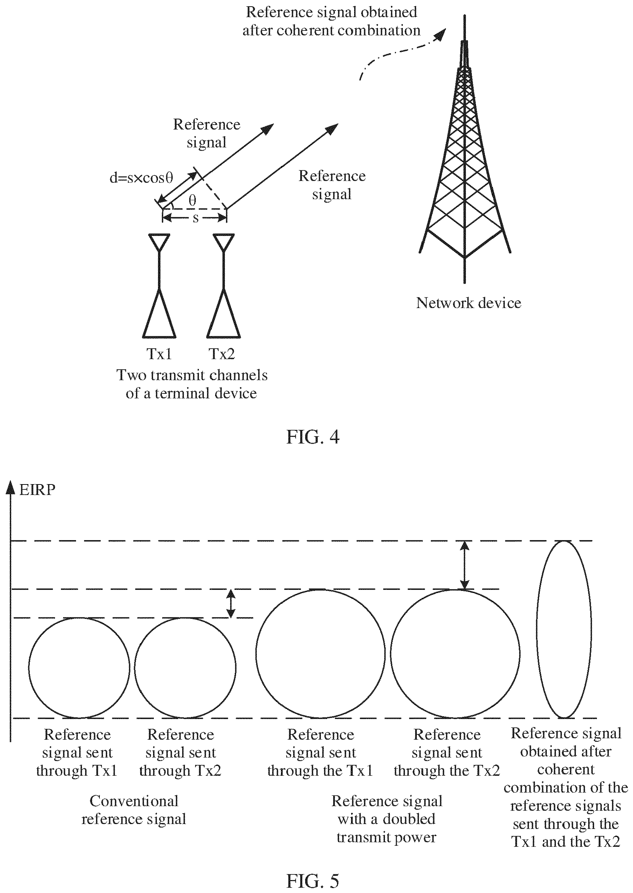

It can be learned from (2), (3), and (4) in FIG. 1C that, compared with an EIRP of a signal sent through a single channel, an EIRP of a coherent signal obtained after beam combination is significantly enhanced. Therefore, in this embodiment of this application, the terminal device may perform phase modulation on the reference signals sent through the plurality of transmit channels, to send the reference signals in a coherent form. Therefore, compared with a conventional reference signal sending method, the method can increase an EIRP of a reference signal obtained after coherent combination, that is, improve coverage of the reference signal, so that a probability that the signal quality of the reference signal received by the network device is poor due to a transmission limitation can be reduced. Refer to FIG. 4. In conclusion, by performing the step, the signal quality of the reference signal received by the network device can be improved, and finally, it is ensured that the communication system can obtain the maximum coherent gain in the uplink transmission direction.

In this embodiment of this application, the terminal device may stagger time domain to use different candidate signal phase differences, that is, the different candidate signal phase differences correspond to different time domain positions. In this implementation, the terminal device sends, based on the first candidate signal phase difference, the reference signals through the plurality of transmit channels at a time domain position corresponding to the first candidate signal phase difference. The terminal device sends, based on a second candidate signal phase difference, the reference signals through the plurality of transmit channels at a time domain position corresponding to the second candidate signal phase difference.

It should be noted that the terminal device and the network device need to agree on a time domain position corresponding to each candidate signal phase difference, so that the network device can receive, at an accurate time domain position, a reference signal sent based on a corresponding candidate signal phase difference. Optionally, the time domain position set for each candidate signal phase difference may be specified in a protocol, or may be configured by the network device for the terminal device, or may be configured by the terminal device and notified to the network device. An agreement form and method are not limited in this application.

In this embodiment of this application, the time domain position corresponding to the candidate signal phase difference may be in a unit of a subframe, a slot, a symbol, or the like. In other words, different candidate signal phase differences correspond to different subframes, slots, or symbols. Optionally, the time domain position corresponding to each candidate signal phase difference may be within different reference signal sending periodicities. Alternatively, to improve reference signal sending efficiency, time domain positions corresponding to the plurality of candidate signal phase differences are within a same reference signal sending periodicity. This is not limited in this application.

In an implementation, the EIRP of the reference signal obtained after coherent combination may be significantly increased by sending the reference signals in the coherent form. Therefore, the terminal device may not adjust a transmit power for sending a reference signal through each transmit channel. To be specific, a transmit power of a first reference signal sent through any transmit channel is equal to a transmit power of a service signal sent through the transmit channel. For example, a transmit power of the first reference signal is equal to a transmit power of a first service signal sent through the first transmit channel, and/or a transmit power of the second reference signal is equal to a transmit power of a second service signal sent through the second transmit channel.

In another implementation, to further improve coverage of the reference signal and ensure the signal quality of the reference signal received by the network device, the terminal device further improves a transmit power of the reference signal on a basis of sending the reference signals in the coherent form. In this implementation, the terminal device may increase the transmit power of the reference signal by using the method described in S201 in the embodiment shown in FIG. 2. For a specific process, refer to the descriptions in S201. Details are not described herein again. For example, a transmit power of the first reference signal is greater than a transmit power of a first service signal, and/or a transmit power of the second reference signal is greater than a transmit power of a second service signal.

Optionally, before performing S301, the terminal device may obtain the plurality of candidate signal phase differences in the following manner.

Manner 1: The terminal device obtains a plurality of stored candidate codebooks, and then the terminal device determines the plurality of candidate signal phase differences corresponding to the plurality of candidate codebooks.

The plurality of candidate codebooks may be set by a manufacturer of the terminal device before delivery of the terminal device, or may be configured by the network device for the terminal device, or may be specified (preset) in a communication protocol, or may be set by a user. This is not limited in this application.

Example 4: In the uplink dual-transmit beamforming system shown in FIG. 1C, a plurality of candidate codebooks that may be stored by the terminal device and corresponding candidate signal phase differences may be shown in Table 9.

**Table 9**

| Codebook identifier | W (codebook) | φ (signal phase difference) |
|---|---|---|
| 0 | $\frac{1}{\sqrt{2}}\begin{bmatrix}1\\1\end{bmatrix}$ | 0° |
| 1 | $\frac{1}{\sqrt{2}}\begin{bmatrix}1\\-1\end{bmatrix}$ | 180° |
| 2 | $\frac{1}{\sqrt{2}}\begin{bmatrix}1\\j\end{bmatrix}$ | 90° |
| 3 | $\frac{1}{\sqrt{2}}\begin{bmatrix}1\\-j\end{bmatrix}$ | -90° |

The codebook identifier may be represented by using a transmitted precoding matrix indicator (transmitted precoding matrix indicator, TPMI) index (index).

Manner 2: The terminal device obtains a plurality of stored candidate signal phase differences.

S302: The network device separately receives the reference signals from the terminal device at the time domain positions corresponding to the plurality of candidate signal phase differences. Then, the network device detects signal quality of a reference signal received at each time domain position, and determines a reference signal (referred to as a target reference signal for short below) with highest signal quality. The network device generates signal phase difference configuration information based on the determined target reference signal. The signal phase difference configuration information indicates a target signal phase difference used to send the target reference signal. The network device sends the signal phase difference configuration information to the terminal device. The terminal device receives the signal phase difference configuration information from the network device.

Because the terminal device sends the reference signals in the coherent form in S301, an EIRP of the reference signal sent at each time domain position is significantly increased. Therefore, the network device can obtain the target reference signal with the highest signal quality through filtering, and can determine the signal phase configuration information based on the target reference signal.

For example, the signal phase difference configuration information may be carried in higher layer signaling or a message.

In this embodiment of this application, the network device may generate, based on the determined target reference signal, the signal phase difference configuration information in, but not limited to, the following manner.

Manner 1: Before performing S301, the terminal device may send a plurality of pieces of signal phase difference information to the network device. The plurality of pieces of signal phase difference information are in a one-to-one correspondence with the plurality of candidate signal phase differences. Optionally, when the time domain position corresponding to each candidate signal phase difference is configured by the network device for the terminal device, after receiving the plurality of pieces of signal phase difference information from the terminal device, the network device may generate a correspondence between the signal phase difference information and the time domain positions, and configure the correspondence for the terminal device. Then, the terminal device obtains, based on the correspondence between the signal phase difference information and the time domain positions, the time domain position corresponding to each candidate signal phase difference.

In addition, the network device may alternatively obtain a correspondence between the signal phase difference information and the time domain positions by using another method. For example, when the network device configures the plurality of candidate signal phase differences for the terminal device, the network device may further configure the correspondence between the signal phase difference information and the time domain positions.

For example, any piece of signal phase difference information may be a serial number/index of a candidate signal phase difference. Alternatively, in a scenario in which the terminal device determines the plurality of candidate signal phase differences by using the plurality of candidate codebooks, any piece of signal phase difference information may be indication information of a candidate codebook corresponding to a candidate signal phase difference.

Based on the foregoing descriptions, the network device can obtain, based on a target time domain position at which the target reference signal is received and the stored correspondence between the signal phase difference information and the time domain positions, target signal phase difference information corresponding to the target time domain position, and then generate the signal phase difference configuration information that includes the target signal phase difference information.

Manner 2: The network device may determine a target time domain position at which the target reference signal is received, and then generates the signal phase difference configuration information based on the target time domain position. The signal phase difference configuration information includes time domain position information that indicates the target time domain position.

S303: The terminal device determines the target signal phase difference indicated by the signal phase difference configuration information.

Corresponding to that the network device generates the signal phase difference configuration information in S302, in this step, the terminal device also determines the target signal phase difference in two manners.

Manner 1 corresponds to Manner 1 recorded in S302.

The terminal device obtains the target signal phase difference information included in the signal phase difference configuration information, and determines the target signal phase difference represented by the target signal phase difference information.

For example, when the signal phase difference information is the serial number/index of the candidate signal phase difference, the terminal device determines the candidate signal phase difference based on the serial number/index of the candidate signal phase difference, and uses the determined candidate signal phase difference as the target signal phase difference.

For another example, when the signal phase difference information is the indication information of the candidate codebook, the terminal device determines the candidate codebook indicated by the indication information of the candidate codebook, determines the candidate signal phase difference corresponding to the candidate codebook, and uses the determined candidate signal phase difference as the target signal phase difference.

Manner 2 corresponds to Manner 2 recorded in S302.

The terminal device obtains the time domain position information included in the signal phase difference configuration information; determines the target time domain position indicated by the time domain position information, determines a candidate signal phase difference corresponding to the target time domain position, and uses the determined candidate signal phase difference as the target signal phase difference.

S304 is the same as S205 in the embodiment shown in FIG. 2. Therefore, for S304, refer to the specific descriptions in S205 in the foregoing embodiment. Details are not described herein again.

Similar to that in the embodiment shown in FIG. 2, in the communication system shown in FIG. 1A, each time when sending the reference signal, the terminal device may perform the reference signal sending method that is described in S301 to S304, or the terminal device performs the foregoing reference signal sending method in a specific scenario, or the terminal device may perform the reference signal sending method that is described in S301 to S304 when still failing, by using the method provided in the embodiment shown in FIG. 2, to obtain valid codebook configuration information, or when a specified condition is met, the terminal device may perform the foregoing reference signal sending method that is provided in this embodiment of this application. Similar to that in S200a to S200c in the embodiment shown in FIG. 2, when any one of Condition 1 to Condition 5 in S300a to S300c is met, the terminal device may perform the method provided in this embodiment of this application. For conditions in S300a to S300c, refer to the descriptions in the conditions in S200a to S200c. Details are not described herein again. A difference lies in that, in Condition 5, the transmission indication indicates the terminal device to send the reference signals in the coherent form. In addition, the transmission indication may further include the time domain position corresponding to each candidate signal phase difference.

It should be noted that the five conditions in S300a to S300c are merely examples, and constitute no limitation on the specified conditions.

In conclusion, this embodiment of this application provides the reference signal sending method. In the method, the terminal device can send the reference signals in the coherent form, so that coverage of the reference signal can be improved, and the probability that the signal quality of the reference signal received by the network device is poor due to the transmission limitation can be reduced. In addition, the EIRP of the reference signal obtained after coherent combination is high. Therefore, the signal quality of the reference signal received by the network device is high, so that the network device can determine the target reference signal with the highest signal quality, and notify the terminal device of the target signal phase difference used to send the target reference signal. In this way, the terminal device can transmit the service signal based on the target signal phase difference, so that the service signal can obtain a maximum coherent gain in the uplink transmission direction, and coverage experience of the user can be improved.

Refer to FIG. 5. In the uplink dual-transmit beamforming system shown in 1B, when the terminal device uses the reference signal sending method provided in the embodiment shown in FIG. 2, if a transmit power of a reference signal sent through each transmit channel is doubled, an EIRP of a reference signal transmitted by using the method is significantly increased compared with an EIRP of a conventional reference signal sent by using a conventional reference signal sending method. When the terminal device uses the reference signal sending method provided in the embodiment shown in FIG. 3, even if a transmit power for sending a reference signal through each transmit channel is not increased, an EIRP of a reference signal obtained after coherent combination is more significantly increased compared with an EIRP of a conventional reference signal.

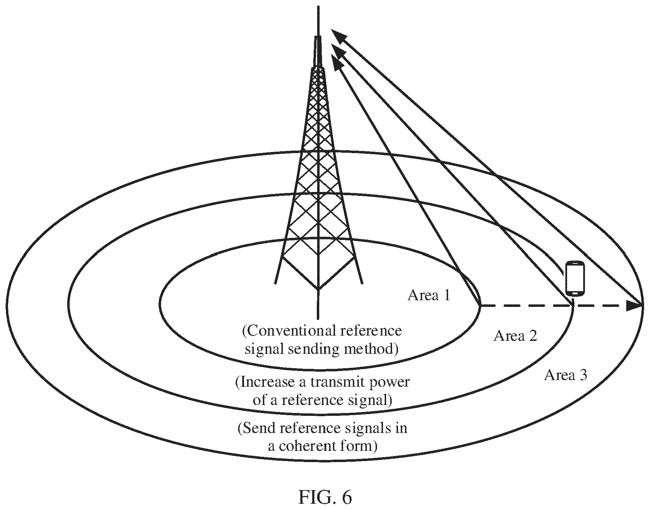

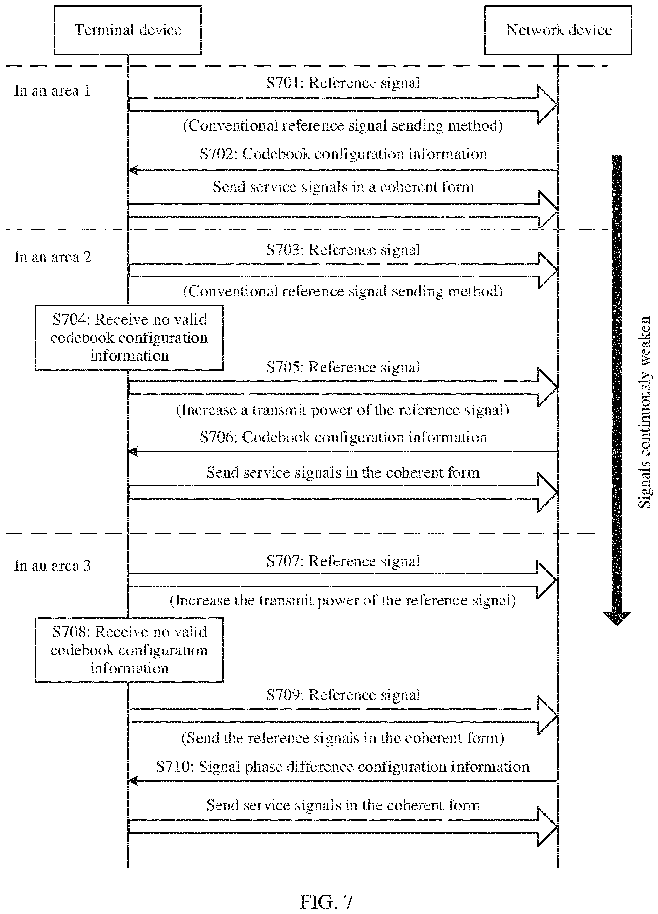

Based on the foregoing descriptions, an embodiment of this application provides a reference signal sending instance. In the instance, a plurality of reference signal sending methods may be combined to improve coverage of a reference signal. For example, in the instance, the uplink dual-transmit beamforming system shown in FIG. 1C is still used as an example. The instance is applicable to weak-coverage scenario shown in FIG. 6. As shown in the figure, the terminal device moves from strong coverage (for example, an area 1 shown in the figure) to weak coverage (for example, an area 3 shown in the figure). The following describes, with reference to a flowchart shown in FIG. 7, a procedure of sending the reference signal by the terminal device in a movement process.

S701: The terminal device is located in the area 1, and sends the reference signal to a network device according to a conventional reference signal sending method.

S702: The network device receives the reference signal from the terminal device, detects amplitude and a phase of the received reference signal, determines a target codebook based on the detected amplitude and phase of the reference signal, and sends codebook configuration information to the terminal device. The codebook configuration information indicates the determined target codebook. The terminal device receives the codebook configuration information from the network device.

Then, the terminal device may determine the target codebook based on the received codebook configuration information, and determine a target signal phase difference based on the determined target codebook. Finally, the terminal device sends service signals in a coherent form based on the target signal phase difference.

S703: The terminal device moves from the area 1 to an area 2, and continues to send the reference signal to the network device according to the conventional reference signal sending method.

S704: Because the terminal device is farther away from the network device, the reference signal undergoes some transmission limitation, and consequently, signal quality of the reference signal received by the network device is poorer. As a result, the network device may not accurately detect the amplitude and the phase of the reference signal, consequently cannot determine the target codebook, and cannot send valid codebook configuration information to the terminal device. As a result, the terminal device receives no valid codebook configuration information.

S705: The terminal device uses the method provided in the embodiment shown in FIG. 2, and increases a transmit power for sending the reference signal when sending the reference signal to the network device. For a specific process, refer to the descriptions in S201 in the embodiment shown in FIG. 2. Details are not described herein again. For example, the terminal device may double a transmit power for sending a reference signal through each transmit channel.

S706 is the same as S702. Then, the terminal device may determine the target codebook based on the received codebook configuration information, and determine the target signal phase difference based on the determined target codebook. Finally, the terminal device sends service signals in the coherent form based on the target signal phase difference.

S707: The terminal device continues to move, moves from the area 2 to the area 3, and continues to send the reference signal to the network device according to the method provided in the embodiment shown in FIG. 2.

S708: It can be learned from FIG. 5 that, after the terminal device doubles a transmit power of the reference signal, an EIRP of the reference signal increases to some extent. However, because the terminal device is farther away from the network device, the transmission limitation is severer, and finally the signal quality of the reference signal received by the network device is poorer. As a result, the network device may not accurately detect the amplitude and the phase of the reference signal, consequently cannot determine the target codebook, and cannot send the valid codebook configuration information to the terminal device. As a result, the terminal device receives no valid codebook configuration information.

S709: The terminal device sends the reference signal in the coherent form by using the method provided in the embodiment shown in FIG. 3. For a specific process, refer to the descriptions in S301 in the embodiment shown in FIG. 3. Details are not described herein again.

S7 10: The network device separately receives the reference signals from the terminal device at a plurality of time domain positions. Then, the network device detects signal quality of a reference signal received at each time domain position, and determines a target reference signal with highest signal quality. The network device generates signal phase difference configuration information based on the determined target reference signal. The network device sends the signal phase difference configuration information to the terminal device. The terminal device receives the signal phase difference configuration information from the network device, and determines the target signal phase difference indicated by the signal phase difference configuration information. For a specific process, refer to the descriptions in S302 in the embodiment shown in FIG. 3. Details are not described herein again.

Then, the terminal device sends service signals in the coherent form based on the target signal phase difference.

It should be noted that the application scenario shown in FIG. 6 and the instance shown in FIG. 7 constitute no limitation on an application scenario and a usage manner of the method provided in this application. During actual application, the method that is provided in this application may be flexibly applied to a communication system based on a specific scenario and a hardware status of a device.

In this instance, the terminal device can adaptively adjust the reference signal sending method based on a transmission status of the reference signal. In this way, coverage of the reference signal is ensured, and a probability that the signal quality of the reference signal received by the network device is poor due to various transmission limitations is reduced, that is, the signal quality of the reference signal received by the network device is improved. Finally, it is ensured that the communication system can obtain a maximum coherent gain in an uplink transmission direction, and coverage experience of a user is improved.

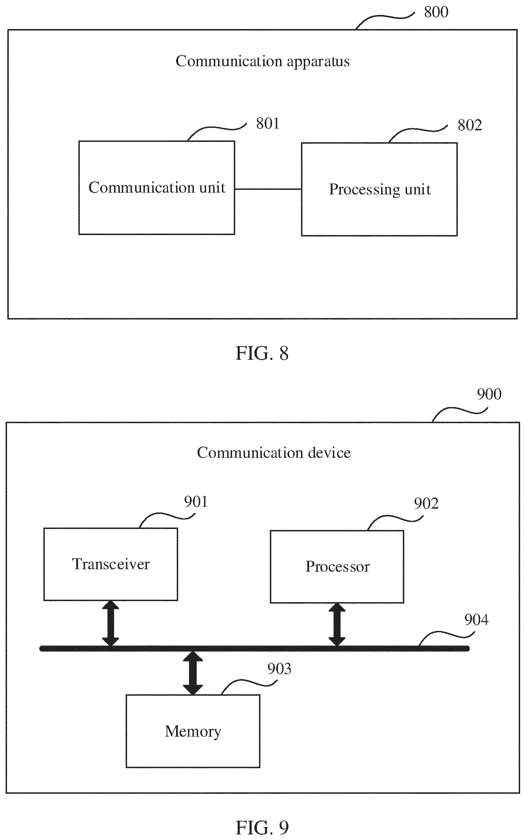

Based on the reference signal sending method and instance that are provided in the foregoing embodiments, an embodiment of this application further provides a communication apparatus. The apparatus is applied to the communication system shown in FIG. 1A, and has a function of implementing the method and the instance that are provided in the foregoing embodiments. Refer to FIG. 8, the communication apparatus 800 includes a communication unit 801 and a processing unit 802.

In an embodiment, the apparatus is applied to a terminal device, and is configured to implement the reference signal sending method provided in the embodiment shown in FIG. 2. The following describes specific functions of the units in the embodiment.

The communication unit 801 is configured to receive and send signals, and the communication unit 801 includes a plurality of transmit channels. Each transmit channel is configured to send a signal, and the plurality of transmit channels include a first transmit channel and a second transmit channel. In addition, the communication unit 801 further includes at least one receive channel, and each receive channel is configured to receive the signal.

The processing unit 802 is configured to: send a first reference signal and a first service signal through the first transmit channel, and send a second reference signal and a second service signal through the second transmit channel.

A transmit power of the first reference signal is greater than a transmit power of the first service signal.

In an implementation, a transmit power of the second reference signal is greater than a transmit power of the second service signal.

In an implementation, the processing unit 802 is specifically configured to:

send the first reference signal through the first transmit channel at a first time domain position; and
send the second reference signal through the second transmit channel at a second time domain position.

The first time domain position is different from the second time domain position.

The transmit power of the first reference signal and the transmit power of the second reference signal each are less than or equal to a total transmit power of the terminal device.

In an implementation, the processing unit 802 is further configured to:

skip sending a signal through the second transmit channel at the first time domain position; and
skip sending a signal through the first transmit channel at the second time domain position.

In an implementation, when the transmit power of the first service signal sent through the first transmit channel is the same as the transmit power of the second service signal sent through the second transmit channel, the transmit power of the first reference signal is less than or equal to n times the transmit power of the first service signal, and the transmit power of the second reference signal is less than or equal to n times the transmit power of the second service signal, where n is an integer greater than or equal to 2.

In an implementation, the processing unit 802 is specifically configured to:

set a total transmit power of the terminal device to a first value, where the first value is greater than a second value, the first value is a total transmit power used when the terminal device sends a reference signal, and the second value is a total transmit power used when the terminal device sends a service signal; and
send the first reference signal through the first transmit channel and send the second reference signal through the second transmit channel based on the specified total transmit power of the terminal device.

In an implementation, when sending the first reference signal through the first transmit channel and sending the second reference signal through the second transmit channel based on the specified total transmit power of the terminal device, the processing unit 802 is specifically configured to:

send the first reference signal through the first transmit channel and send the second reference signal through the second transmit channel at a same time domain position based on the specified total transmit power of the terminal device, where a sum of the transmit power of the first reference signal and a transmit power of the second reference signal is less than or equal to the specified total transmit power of the terminal device; or
send the first reference signal through the first transmit channel at a first time domain position and send the second reference signal through the second transmit channel at a second time domain position based on the specified total transmit power of the terminal device, where the first time domain position is different from the second time domain position, and the transmit power of the first reference signal and a transmit power of the second reference signal each are less than or equal to the specified total transmit power of the terminal device.

In an implementation, when sending the first reference signal through the first transmit channel and sending the second reference signal through the second transmit channel, the processing unit 802 is specifically configured to: when receiving, by using the communication unit 801, that signal quality of a network device deteriorates, or when receiving, by using the communication unit 801 at a current moment, that signal quality of a network device is less than a specified threshold, send the first reference signal through the first transmit channel, and send the second reference signal through the second transmit channel.

Alternatively, the processing unit 802 is further configured to: before sending the first reference signal through the first transmit channel and sending the second reference signal through the second transmit channel, send a third reference signal through the first transmit channel, and send a fourth reference signal through the second transmit channel, where a transmit power of the third reference signal is equal to the transmit power of the first service signal, and a transmit power of the fourth reference signal is equal to the transmit power of the second service signal; and receive a negative acknowledgment response of the third reference signal and/or a negative acknowledgment response of the fourth reference signal from the network device by using the communication unit 801, or receive no acknowledgment response of the third reference signal and/or acknowledgment response of the fourth reference signal from the network device by using the communication unit 801, or receive no codebook configuration information from the network device by using the communication unit 801; or before sending the first reference signal through the first transmit channel and sending the second reference signal through the second transmit channel, receive, by using the communication unit 801, a first transmission indication sent by the network device, where the first transmission indication indicates the terminal device to increase a transmit power of the reference signal.

In an implementation, the processing unit 802 is further configured to:

after sending the first reference signal through the first transmit channel and sending the second reference signal through the second transmit channel, receive codebook configuration information from the network device by using the communication unit 801, where the codebook configuration information indicates a target codebook;
obtain the target codebook indicated by the codebook configuration information;
obtain a target signal phase difference based on the target codebook; and
send a third service signal through the first transmit channel and send a fourth service signal through the second transmit channel based on the target signal phase difference, where a phase difference between the third service signal and the fourth service signal is equal to the target signal phase difference.

In an implementation, a phase difference between the first reference signal and the second reference signal is 0. The processing unit 802 is further configured to:
after sending the first reference signal through the first transmit channel and sending the second reference signal through the second transmit channel, when receiving a negative acknowledgment response of the first reference signal and/or a negative acknowledgment response of the second reference signal from the network device by using the communication unit 801, or receiving no acknowledgment response of the first reference signal and/or acknowledgment response of the second reference signal by using the communication unit 801, or receiving no codebook configuration information from the network device by using the communication unit 801, or receiving a second transmission indication sent by the network device by using the communication unit 801, send a fifth reference signal through the first transmit channel and send a sixth reference signal through the second transmit channel based on each of a plurality of specified candidate signal phase differences, where the second transmission indication indicates the terminal device to send the reference signals in a coherent form.

When the processing unit 802 sends the fifth reference signal through the first transmit channel and sends the sixth reference signal through the second transmit channel based on a first candidate signal phase difference, a phase difference between the fifth reference signal and the sixth reference signal is equal to the first candidate signal phase difference. The first candidate signal phase difference is any one of the plurality of candidate signal phase differences.

In an implementation, when sending the fifth reference signal through the first transmit channel and sending the sixth reference signal through the second transmit channel based on the first candidate signal phase difference, the processing unit 802 is specifically configured to:
send the fifth reference signal through the first transmit channel and send the sixth reference signal through the second transmit channel based on the first candidate signal phase difference at a time domain position corresponding to the first candidate signal phase difference.

Different candidate signal phase differences correspond to different time domain positions.

In an implementation, a transmit power of the fifth reference signal is equal to the transmit power of the first service signal, and/or a transmit power of the sixth reference signal is equal to the transmit power of the second service signal.

In an implementation, the processing unit 802 is further configured to:

after sending the fifth reference signal through the first transmit channel and sending the sixth reference signal through the second transmit channel based on each of the plurality of specified candidate signal phase differences, receive signal phase difference configuration information from the network device by using the communication unit 801, where the signal phase difference configuration information indicates a target signal phase difference, and the target signal phase difference belongs to the plurality of candidate signal phase differences;
obtain the target signal phase difference indicated by the signal phase difference configuration information; and
send a fifth service signal through the first transmit channel and send a sixth service signal through the second transmit channel based on the target signal phase difference, where a phase difference between the fifth service signal and the sixth service signal is equal to the target signal phase difference.

In an implementation, the processing unit 802 is further configured to:
send a plurality of pieces of signal phase difference information to the network device by using the communication unit 801, where the plurality of pieces of signal phase difference information are in a one-to-one correspondence with the plurality of candidate signal phase differences.

The signal phase difference configuration information includes target signal phase difference information, and the target signal phase difference information is included in the plurality of pieces of signal phase difference information. When obtaining the target signal phase difference indicated by the signal phase difference configuration information, the processing unit 802 is specifically configured to:

obtain the target signal phase difference information included in the signal phase difference configuration information; and
obtain the target signal phase difference based on the target signal phase difference information.

In an implementation, any one piece of signal phase difference information includes a serial number/index of a candidate signal phase difference or indication information of a candidate codebook corresponding to a candidate signal phase difference.

In an implementation, the signal phase difference configuration information includes target time domain position information. When obtaining the target signal phase difference indicated by the signal phase difference configuration information, the processing unit 802 is specifically configured to:

obtain the target time domain position information included in the signal phase difference configuration information;
obtain a target time domain position indicated by the target time domain position information; and
obtain a candidate signal phase difference corresponding to the target time domain position, and use the obtained candidate signal phase difference as the target signal phase difference.

In an implementation, the processing unit 802 is further configured to:

read a plurality of stored candidate codebooks; and
obtain the plurality of candidate signal phase differences corresponding to the plurality of candidate codebooks.

In an embodiment, the apparatus is applied to a terminal device, and is configured to implement the reference signal sending method provided in the embodiment shown in FIG. 3. The following describes specific functions of the units in the embodiment.

The communication unit 801 is configured to receive and send signals, and the communication unit 801 includes a plurality of transmit channels. Each transmit channel is configured to send a signal, and the plurality of transmit channels include a first transmit channel and a second transmit channel. In addition, the communication unit 801 further includes at least one receive channel, and each receive channel is configured to receive the signal.

The processing unit 802 is configured to send a first reference signal through the first transmit channel and send a second reference signal through the second transmit channel based on each of a plurality of specified candidate signal phase differences.

When the processing unit 802 sends the first reference signal through the first transmit channel and sends the second reference signal through the second transmit channel based on a first candidate signal phase difference, a phase difference between the first reference signal and the second reference signal is equal to the first candidate signal phase difference. The first candidate signal phase difference is any one of the plurality of candidate signal phase differences.

In an implementation, when sending the first reference signal through the first transmit channel and sending the second reference signal through the second transmit channel based on the first candidate signal phase difference, the processing unit 802 is specifically configured to:
send the first reference signal through the first transmit channel and send the second reference signal through the second transmit channel based on the first candidate signal phase difference at a time domain position corresponding to the first candidate signal phase difference.

Different candidate signal phase differences correspond to different time domain positions.

In an implementation, a transmit power of the first reference signal is equal to a transmit power of a first service signal sent through the first transmit channel, and/or a transmit power of the second reference signal is equal to a transmit power of a second service signal sent through the second transmit channel.

In an implementation, after sending the first reference signal through the first transmit channel and sending the second reference signal through the second transmit channel based on each of the plurality of specified candidate signal phase differences, the processing unit 802 is specifically configured to: when receiving that signal quality of a signal from a network device deteriorates, or when receiving, at a current moment, that signal quality of a signal from a network device is less than a specified threshold, send the first reference signal through the first transmit channel and send the second reference signal through the second transmit channel based on each of the plurality of candidate signal phase differences.

Alternatively, the processing unit 802 is further configured to:

before sending the first reference signal through the first transmit channel and sending the second reference signal through the second transmit channel based on each of the plurality of specified candidate signal phase differences, send a third reference signal through the first transmit channel, and send a fourth reference signal through the second transmit channel, where a transmit power of the third reference signal is equal to the transmit power of the first service signal, a transmit power of the fourth reference signal is equal to the transmit power of the second service signal, and a phase difference between the third reference signal and the fourth reference signal is 0; and
receive a negative acknowledgment response of the third reference signal and/or a negative acknowledgment response of the fourth reference signal from the network device by using the communication unit 801, or receive no acknowledgment response of the third reference signal and/or acknowledgment response of the fourth reference signal from the network device by using the communication unit 801, or receive no codebook configuration information from the network device by using the communication unit 801; or
before sending the first reference signal through the first transmit channel and sending the second reference signal through the second transmit channel based on each of the plurality of specified candidate signal phase differences, receive, by using the communication unit 801, a transmission indication sent by the network device, where the transmission indication indicates the terminal device to send reference signals in a coherent form.

In an implementation, the processing unit 802 is further configured to:

after sending the first reference signal through the first transmit channel and sending the second reference signal through the second transmit channel based on each of the plurality of specified candidate signal phase differences, receive signal phase difference configuration information from the network device by using the communication unit 801, where the signal phase difference configuration information indicates a target signal phase difference, and the target signal phase difference belongs to the plurality of candidate signal phase differences;
obtain the target signal phase difference indicated by the signal phase difference configuration information; and
send a third service signal through the first transmit channel and send a fourth service signal through the second transmit channel based on the target signal phase difference, where a phase difference between the third service signal and the fourth service signal is equal to the target signal phase difference.

In an implementation, the processing unit 802 is further configured to send a plurality of pieces of signal phase difference information to the network device by using the communication unit 801, where the plurality of pieces of signal phase difference information are in a one-to-one correspondence with the plurality of candidate signal phase differences.
The signal phase difference configuration information includes target signal phase difference information, and the target signal phase difference information belongs to the plurality of pieces of signal phase difference information. When obtaining the target signal phase difference indicated by the signal phase difference configuration information, the processing unit 802 is specifically configured to:

obtain the target signal phase difference information included in the signal phase difference configuration information; and
obtain the target signal phase difference based on the target signal phase difference information.

In an implementation, any one piece of signal phase difference information includes a serial number/index of a candidate signal phase difference or indication information of a candidate codebook corresponding to a candidate signal phase difference.
In an implementation, the signal phase difference configuration information includes target time domain position information. When obtaining the target signal phase difference indicated by the signal phase difference configuration information, the processing unit 802 is specifically configured to:

obtain the target time domain position information included in the signal phase difference configuration information;
obtain a target time domain position indicated by the target time domain position information; and
obtain a candidate signal phase difference corresponding to the target time domain position, and use the obtained candidate signal phase difference as the target signal phase difference.

In an implementation, the processing unit 802 is further configured to:

read a plurality of stored candidate codebooks; and
obtain the plurality of candidate signal phase differences corresponding to the plurality of candidate codebooks.

In an embodiment, the apparatus is applied to a network device, and is configured to implement the reference signal sending method provided in the embodiment shown in FIG. 3. The following describes specific functions of the units in the embodiment.
The communication unit 801 is configured to receive and send signals, and the communication unit 801 includes at least one transmit channel and at least one receive channel. Each transmit channel is configured to send a signal, and each receive channel is configured to receive the signal.
The processing unit 802 is configured to receive reference signals from a terminal device at a plurality of time domain positions.
Reference signals received at different time domain positions are sent by the terminal device by using different candidate signal phase differences.
In an implementation, the processing unit 802 is further configured to:

detect signal quality of a reference signal received in each time domain;
determine a target reference signal with highest signal quality from the reference signals received at the plurality of time domain positions;
generate signal phase difference configuration information based on the target reference signal, where the signal phase difference configuration information indicates a target signal phase difference used to send the target reference signal; and
send the signal phase difference configuration information to the terminal device by using the communication unit 801.

In an implementation, the processing unit 802 is further configured to receive a plurality of pieces of signal phase difference information from the terminal device by using the communication unit 801. The plurality of pieces of signal phase difference information are in a one-to-one correspondence with a plurality of candidate phase differences used by the terminal device.

When generating the signal phase difference configuration information based on the target reference signal, the processing unit 802 is specifically configured to:

obtain, based on a target time domain position at which the target reference signal is received and a stored correspondence between the signal phase difference information and the time domain positions, target signal phase difference information corresponding to the target time domain position; and
generate the signal phase difference configuration information that includes the target signal phase difference information.

In an implementation, any one piece of signal phase difference information includes a serial number/index of a candidate signal phase difference or indication information of a candidate codebook corresponding to a candidate signal phase difference.

In an implementation, when generating the signal phase difference configuration information based on the target reference signal, the processing unit 802 is specifically configured to:
generate the signal phase difference configuration information based on a target time domain position at which the target reference signal is received. The signal phase difference configuration information includes time domain position information that indicates the target time domain position.

It should be noted that, in the foregoing embodiment of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

The integrated unit may be stored in a computer-readable storage medium when being implemented in the form of the software functional unit and sold or used as an independent product. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

Based on a same technical concept, this application further provides a communication device. The communication device may be applied to the communication system shown in FIG. 1A, may implement the methods provided in the foregoing embodiments and instance, and has a function of the communication apparatus shown in FIG. 8. Refer to FIG. 9. The communication device 900 includes a transceiver 901, a processor 902, and a memory 903. The transceiver 901, the processor 902, and the memory 903 are connected to each other.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The transceiver 901 is configured to receive and send signals, to implement communication interaction with another device. Optionally, the transceiver includes at least one transmit channel configured to send the signal and at least one receive channel configured to receive the signal. For example, a structure of any transmit channel may be shown as the transmit channel in the wireless transmission system shown in FIG. 1B. Certainly, the transmit channel in the communication device in this embodiment may have more or fewer components than those of the transmit channel described in FIG. 1B, or some components may be combined, or some components may be split, or there may be a different component deployment.

In an implementation, the communication device 900 is applied to the terminal device in the embodiment shown in FIG. 2. In this case, the processor 902 is configured to:
send a first reference signal and a first service signal through a first transmit channel in the transceiver 901, and send a second reference signal and a second service signal through a second transmit channel in the transceiver 901.

A transmit power of the first reference signal is greater than a transmit power of the first service signal.

In an implementation, the communication device 900 is applied to the terminal device in the embodiment shown in FIG. 3. In this case, the processor 902 is configured to:

send a first reference signal through a first transmit channel in the transceiver 901 and send a second reference signal through a second transmit channel in the transceiver 901 based on each of a plurality of specified candidate signal phase differences.

When the processor 902 sends the first reference signal through the first transmit channel and sends the second reference signal through the second transmit channel based on a first candidate signal phase difference, a phase difference between the first reference signal and the second reference signal is equal to the first candidate signal phase difference. The first candidate signal phase difference is any one of the plurality of candidate signal phase differences.

In an implementation, the communication device 900 is applied to the network device in the embodiment shown in FIG. 3. In this case, the processor 902 is configured to:

receive reference signals from a terminal device at a plurality of time domain positions by using the transceiver 901.

Reference signals received at different time domain positions are sent by the terminal device by using different candidate signal phase differences.

It should be noted that a specific function of the processor 902 is not described in detail in this embodiment. For the specific function of the processor 902, refer to the descriptions in the methods provided in the foregoing corresponding embodiments and the specific function descriptions of the communication apparatus 800 in the embodiment shown in FIG. 8. Details are not described herein again.

The memory 903 is configured to store program instructions, data, and the like. Specifically, the program instructions may include program code. The program code includes computer operation instructions. The memory 903 may include a random access memory (random access memory, RAM), and may further include a non-volatile memory (non-volatile memory), for example, at least one magnetic disk memory. The processor 902 executes the program instructions stored in the memory 903, and implements the foregoing functions by using the data stored in the memory 903, to implement the reference signal sending methods provided in the foregoing embodiments.

It may be understood that the memory 903 in FIG. 9 in this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these and any memory of another suitable type.

Based on the foregoing embodiments, an embodiment of this application provides a communication system. The communication system includes a terminal device and a network device. In an implementation, the terminal device is configured to implement the reference signal sending method shown in FIG. 2. In another implementation, the terminal device and the network device are configured to implement the reference signal sending method shown in FIG. 3.

Based on the foregoing embodiments, an embodiment of this application further provides a computer program. When the computer program is run on a computer, the computer is enabled to perform the reference signal sending method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the reference signal sending method provided in the foregoing embodiments.

The storage medium may be any available medium that can be accessed by a computer. The following provides an example but does not impose a limitation: The computer-readable medium may include a RAM, a ROM, an EEPROM, a CD-ROM, another optical disc storage or magnetic disk storage medium, another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the reference signal sending method provided in the foregoing embodiments.

Based on the foregoing embodiments, an embodiment of this application provides a chip system. The chip system includes a processor, configured to support a computer apparatus in implementing a function related to the terminal device or the network device in the foregoing embodiments. In a possible design, the chip system further includes a memory. The memory is configured to store a program and data that are necessary for the computer apparatus. The chip system may include a chip, or may include a chip and another discrete component.

This application provides the reference signal sending method and the apparatus, to resolve a problem that signal quality of a reference signal sent by a terminal device is poor due to a transmission limitation. In the method, a terminal device having a multi-transmit capability in a communication system may increase a transmit power for sending a reference signal, or send reference signals in a coherent form. According to the solution, coverage of the reference signal can be improved, and a probability that signal quality of the reference signal received by a network device is poor due to a transmission limitation can be reduced, that is, the signal quality of the reference signal received by the network device is improved. Finally, it is ensured that the communication system can obtain a maximum coherent gain in an uplink transmission direction, and coverage experience of a user is improved.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more procedures in the flowcharts and/or in one or more blocks in the block diagrams.

These computer program instructions may be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may be alternatively loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. In this way, this application is intended to cover these modifications and variations of this application provided that they fall within the scope of the claims of this application and equivalent technologies thereof.

**Claims**

1. A reference signal sending method, wherein the method comprises:

   sending, by a terminal device, a first reference signal and a first service signal through a first transmit channel; and
   sending, by the terminal device, a second reference signal and a second service signal through a second transmit channel, wherein
   a transmit power of the first reference signal is greater than a transmit power of the first service signal.

2. The method according to claim 1, wherein a transmit power of the second reference signal is greater than a transmit power of the second service signal.

3. The method according to claim 1 or 2, wherein the sending, by a terminal device, a first reference signal through a first transmit channel, and sending a second reference signal through a second transmit channel comprises:

sending, by the terminal device, the first reference signal through the first transmit channel at a first time domain position; and

sending, by the terminal device, the second reference signal through the second transmit channel at a second time domain position, wherein

the first time domain position is different from the second time domain position; and

the transmit power of the first reference signal and the transmit power of the second reference signal each are less than or equal to a total transmit power of the terminal device.

4. The method according to claim 3, wherein the method further comprises:

skipping, by the terminal device, sending a signal through the second transmit channel at the first time domain position; and

skipping, by the terminal device, sending a signal through the first transmit channel at the second time domain position.

5. The method according to claim 3 or 4, wherein when the transmit power of the first service signal sent through the first transmit channel is the same as the transmit power of the second service signal sent through the second transmit channel, the transmit power of the first reference signal is less than or equal to n times the transmit power of the first service signal, and the transmit power of the second reference signal is less than or equal to n times the transmit power of the second service signal, wherein n is an integer greater than or equal to 2.

6. The method according to claim 1, wherein the sending, by a terminal device, a first reference signal through a first transmit channel, and sending a second reference signal through a second transmit channel comprises:

setting, by the terminal device, a total transmit power of the terminal device to a first value, wherein the first value is greater than a second value, the first value is a total transmit power used when the terminal device sends a reference signal, and the second value is a total transmit power used when the terminal device sends a service signal; and

sending, by the terminal device, the first reference signal through the first transmit channel and sending the second reference signal through the second transmit channel based on the specified total transmit power of the terminal device.

7. The method according to claim 6, wherein the sending, by the terminal device, the first reference signal through the first transmit channel and sending the second reference signal through the second transmit channel based on the specified total transmit power of the terminal device comprises:

sending, by the terminal device, the first reference signal through the first transmit channel and sending the second reference signal through the second transmit channel at a same time domain position based on the specified total transmit power of the terminal device, wherein a sum of the transmit power of the first reference signal and a transmit power of the second reference signal is less than or equal to the specified total transmit power of the terminal device; or

sending, by the terminal device, the first reference signal through the first transmit channel at a first time domain position and sending the second reference signal through the second transmit channel at a second time domain position based on the specified total transmit power of the terminal device, wherein the first time domain position is different from the second time domain position, and the transmit power of the first reference signal and a transmit power of the second reference signal each are less than or equal to the specified total transmit power of the terminal device.

8. The method according to any one of claims 1 to 7, wherein

the sending, by a terminal device, a first reference signal through a first transmit channel, and sending a second reference signal through a second transmit channel comprises: when signal quality of a signal received by the terminal device from a network device deteriorates, or when signal quality of a signal received by the terminal device from a network device at a current moment is less than a specified threshold, sending, by the terminal device, the first reference signal through the first transmit channel, and sending the second reference signal through the second transmit channel; or

before the sending, by a terminal device, a first reference signal through a first transmit channel, and sending a second reference signal through a second transmit channel, the method further comprises:

EP 4 236 488 A1

sending, by the terminal device, a third reference signal through the first transmit channel, and sending a fourth reference signal through the second transmit channel, wherein a transmit power of the third reference signal is equal to the transmit power of the first service signal, and a transmit power of the fourth reference signal is equal to the transmit power of the second service signal; and receiving, by the terminal device, a negative acknowledgment response of the third reference signal and/or a negative acknowledgment response of the fourth reference signal from the network device, or receiving, by the terminal device, no acknowledgment response of the third reference signal and/or acknowledgment response of the fourth reference signal from the network device, or receiving, by the terminal device, no codebook configuration information from the network device; or

receiving, by the terminal device, a first transmission indication sent by a network device, wherein the first transmission indication indicates the terminal device to increase a transmit power of the reference signal.

9. The method according to any one of claims 1 to 8, wherein after the sending, by a terminal device, a first reference signal through a first transmit channel, and sending a second reference signal through a second transmit channel, the method further comprises:

receiving, by the terminal device, codebook configuration information from the network device, wherein the codebook configuration information indicates a target codebook;
obtaining, by the terminal device, the target codebook indicated by the codebook configuration information;
obtaining, by the terminal device, a target signal phase difference based on the target codebook; and
sending, by the terminal device, a third service signal through the first transmit channel and sending a fourth service signal through the second transmit channel based on the target signal phase difference, wherein a phase difference between the third service signal and the fourth service signal is equal to the target signal phase difference.

10. The method according to any one of claims 1 to 8, wherein a phase difference between the first reference signal and the second reference signal is 0, and after the sending, by a terminal device, a first reference signal through a first transmit channel, and sending a second reference signal through a second transmit channel, the method further comprises:

when the terminal device receives a negative acknowledgment response of the first reference signal and/or a negative acknowledgment response of the second reference signal from the network device, or receives no acknowledgment response of the first reference signal and/or acknowledgment response of the second reference signal, or receives no codebook configuration information from the network device, or receives a second transmission indication sent by the network device, sending, by the terminal device, a fifth reference signal through the first transmit channel and sending a sixth reference signal through the second transmit channel based on each of a plurality of specified candidate signal phase differences, wherein the second transmission indication indicates the terminal device to send the reference signals in a coherent form, wherein
when the terminal device sends the fifth reference signal through the first transmit channel and sends the sixth reference signal through the second transmit channel based on a first candidate signal phase difference, a phase difference between the fifth reference signal and the sixth reference signal is equal to the first candidate signal phase difference, and the first candidate signal phase difference is any one of the plurality of candidate signal phase differences.

11. The method according to claim 10, wherein that the terminal device sends the fifth reference signal through the first transmit channel and sends the sixth reference signal through the second transmit channel based on a first candidate signal phase difference comprises:

sending, by the terminal device, the fifth reference signal through the first transmit channel and sending the sixth reference signal through the second transmit channel based on the first candidate signal phase difference at a time domain position corresponding to the first candidate signal phase difference, wherein different candidate signal phase differences correspond to different time domain positions.

12. The method according to claim 10 or 11, wherein a transmit power of the fifth reference signal is equal to the transmit power of the first service signal, and/or a transmit power of the sixth reference signal is equal to the transmit power of the second service signal.

13. The method according to any one of claims 10 to 12, wherein after the sending, by the terminal device, a fifth reference signal through the first transmit channel and sending a sixth reference signal through the second transmit channel based on each of a plurality of specified candidate signal phase differences, the method further comprises:

receiving, by the terminal device, signal phase difference configuration information from the network device, wherein the signal phase difference configuration information indicates a target signal phase difference, and the target signal phase difference belongs to the plurality of candidate signal phase differences;

obtaining, by the terminal device, the target signal phase difference indicated by the signal phase difference configuration information; and

sending, by the terminal device, a fifth service signal through the first transmit channel and sending a sixth service signal through the second transmit channel based on the target signal phase difference, wherein a phase difference between the fifth service signal and the sixth service signal is equal to the target signal phase difference.

14. The method according to claim 13, wherein the method further comprises: sending, by the terminal device, a plurality of pieces of signal phase difference information to the network device, wherein the plurality of pieces of signal phase difference information are in a one-to-one correspondence with the plurality of candidate signal phase differences; and

the signal phase difference configuration information comprises target signal phase difference information, the target signal phase difference information is comprised in the plurality of pieces of signal phase difference information, and the obtaining, by the terminal device, the target signal phase difference indicated by the signal phase difference configuration information comprises:

obtaining, by the terminal device, the target signal phase difference information comprised in the signal phase difference configuration information; and

obtaining, by the terminal device, the target signal phase difference based on the target signal phase difference information.

15. The method according to claim 14, wherein any one piece of signal phase difference information comprises a serial number/index of a candidate signal phase difference or indication information of a candidate codebook corresponding to a candidate signal phase difference.

16. The method according to claim 13, wherein the signal phase difference configuration information comprises target time domain position information, and the obtaining, by the terminal device, the target signal phase difference indicated by the signal phase difference configuration information comprises:

obtaining, by the terminal device, the target time domain position information comprised in the signal phase difference configuration information;

obtaining, by the terminal device, a target time domain position indicated by the target time domain position information; and

obtaining, by the terminal device, a candidate signal phase difference corresponding to the target time domain position, and using the obtained candidate signal phase difference as the target signal phase difference.

17. The method according to any one of claims 10 to 16, wherein the method further comprises:

reading, by the terminal device, a plurality of stored candidate codebooks; and

obtaining, by the terminal device, the plurality of candidate signal phase differences corresponding to the plurality of candidate codebooks.

18. A communication apparatus, wherein the communication apparatus is applied to a terminal device, and comprises:

a communication unit, configured to receive and send signals, wherein the communication unit comprises a plurality of transmit channels, each transmit channel is configured to send a signal, and the plurality of transmit channels comprise a first transmit channel and a second transmit channel; and

a processing unit, configured to: send a first reference signal and a first service signal through the first transmit channel, and send a second reference signal and a second service signal through the second transmit channel, wherein

a transmit power of the first reference signal is greater than a transmit power of the first service signal.

**19.** A computer storage medium, wherein the computer storage medium stores a computer program, and when the computer program is executed by a computer, the computer is enabled to perform the method according to any one of claims 1 to 17.

**20.** A chip, wherein the chip is configured to read a computer program stored in a memory, to perform the method according to any one of claims 1 to 17.

Terminal device a
(vehicle-mounted device)

Terminal device b
(smartphone)

Network device

FIG. 1A

FIG. 1B

$d = s \times \cos\theta$

$\theta$

$s$

Tx1    Tx2

Two transmit channels
of a terminal device

Network device

(1) Uplink dual-transmit beamforming system

Radiation direction
of a signal sent
through the Tx1

Radiation direction
of a signal sent
through the Tx2

Radiation direction of
a coherent signal
obtained after coherent
combination of signals
sent through the Tx1
and the Tx2 (form a
beam)

(2) Radiation pattern of a signal
sent through a single channel

(3) Radiation pattern
of a coherent signal

EIRP

Difference between EIRPs of
the signal sent through the
single channel and the
coherent signal

Signal sent
through the Tx1

Signal sent
through the Tx2

Coherent signal obtained after
coherent combination of the signals
sent through the Tx1 and the Tx2

(4) Schematic diagram of comparison between EIRPs of the
signal sent through the single channel and the coherent signal

FIG. 1C

```
┌─────────────────────┐                                    ┌─────────────────┐
│   Terminal device   │                                    │  Network device │
└─────────────────────┘                                    └─────────────────┘
```

S200a: Determine that signal quality of the network device deteriorates or signal quality of the network device is less than a specified threshold

S200b1: Reference signal

S200b21: Negative acknowledgment response of the reference signal

S200b22: Receive no acknowledgment response of the reference signal

S200b23: Receive no codebook configuration information

S200c: First transmission indication

S201: Reference signal

S202: Codebook configuration information

S203: Determine a target codebook indicated by the codebook configuration information

S204: Determine a target signal phase difference based on the target codebook

S205: Send service signals through a plurality of transmit channels based on the target signal phase difference

Service signals

FIG. 2

Terminal device

Network device

S300a: Determine that signal quality of the network device deteriorates or signal quality of the network device is less than a specified threshold

S300b1: Reference signal

S300b21: Negative acknowledgment response of the reference signal

S300b22: Receive no acknowledgment response of the reference signal

S300b23: Receive no codebook configuration information

S300c: Transmission indication

S301: Send first reference signals through a plurality of transmit channels based on each of a plurality of specified candidate signal phase differences

Reference signals

S302: Signal phase difference configuration information

S303: Determine a target signal phase difference indicated by the signal phase difference configuration information

S304: Send service signals through the plurality of transmit channels based on the target signal phase difference

Service signals

FIG. 3

Reference signal obtained
after coherent combination

Reference
signal

d=s×cosθ

Reference
signal

θ

s

Network device

Tx1  Tx2
Two transmit channels
of a terminal device

FIG. 4

EIRP

Reference
signal sent
through Tx1

Reference
signal sent
through Tx2

Reference
signal sent
through the Tx1

Reference
signal sent
through the Tx2

Reference signal
obtained after
coherent
combination of the
reference signals
sent through the
Tx1 and the Tx2

Conventional
reference signal

Reference signal
with a doubled
transmit power

FIG. 5

Area 1

(Conventional reference
signal sending method)

Area 2

(Increase a transmit power
of a reference signal)

Area 3

(Send reference signals in
a coherent form)

FIG. 6

FIG. 7

800

## Communication apparatus

801

Communication unit

802

Processing unit

## FIG. 8

900

## Communication device

901

Transceiver

902

Processor

904

903

Memory

## FIG. 9

## INTERNATIONAL SEARCH REPORT

International application No.

**PCT/CN2021/134042**

### A. CLASSIFICATION OF SUBJECT MATTER

H04W 52/14(2009.01)i

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; ENTXTTC; ENTXT; 3GPP; CNKI: 参考信号, 导频, 前导, 业务信号, 业务数据, 数据符号, 功率, 高, 大于, 通道, 多, 第二; reference signal, pilot, preamble, service signal, service data, data symbol, power, higher, more than, greater than, tunnel, multi, multiple, second

### C. DOCUMENTS CONSIDERED TO BE RELEVANT

| Category* | Citation of document, with indication, where appropriate, of the relevant passages | Relevant to claim No. |
|---|---|---|
| X | CN 1605172 A (NORTEL NETWORKS LIMITED) 06 April 2005 (2005-04-06) claims 1-20, description page 8 line 5- page 11 line 27, page 16 lines 18-24 | 1-8, 18-20 |
| A | CN 103339992 A (QUALCOMM INC.) 02 October 2013 (2013-10-02) entire document | 1-20 |
| A | CN 104243370 A (INSTITUTE OF INFORMATION ENGINEERING, CHINESE ACADEMY OF SCIENCES) 24 December 2014 (2014-12-24) entire document | 1-20 |
| A | US 2011177827 A1 (CELLULAR SPECIALTIES INC.) 21 July 2011 (2011-07-21) entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 January 2022** | **09 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2021/134042**

| Patent document cited in search report | | | Publication date (day/month/year) | Patent family member(s) | | | Publication date (day/month/year) |
|---|---|---|---|---|---|---|---|
| CN | 1605172 | A | 06 April 2005 | US | 2013010887 | A1 | 10 January 2013 |
| | | | | US | 8462872 | B2 | 11 June 2013 |
| | | | | US | 2013223553 | A1 | 29 August 2013 |
| | | | | US | 8964523 | B2 | 24 February 2015 |
| | | | | US | 2011216808 | A1 | 08 September 2011 |
| | | | | US | 8325836 | B2 | 04 December 2012 |
| | | | | US | 2016036611 | A1 | 04 February 2016 |
| | | | | US | 9503300 | B2 | 22 November 2016 |
| | | | | US | 2015180630 | A1 | 25 June 2015 |
| | | | | US | 9313065 | B2 | 12 April 2016 |
| | | | | EP | 1442549 | A1 | 04 August 2004 |
| | | | | US | 2015085820 | A1 | 26 March 2015 |
| | | | | US | 9154281 | B2 | 06 October 2015 |
| | | | | US | 2010271930 | A1 | 28 October 2010 |
| | | | | US | 7949061 | B2 | 24 May 2011 |
| | | | | WO | 03034644 | A1 | 24 April 2003 |
| | | | | EP | 3065332 | A1 | 07 September 2016 |
| | | | | EP | 3065332 | B1 | 18 December 2019 |
| | | | | US | 2007053282 | A1 | 08 March 2007 |
| | | | | US | 7778337 | B2 | 17 August 2010 |
| | | | | US | 2016226691 | A1 | 04 August 2016 |
| | | | | US | 9780984 | B2 | 03 October 2017 |
| | | | | KR | 20040045859 | A | 02 June 2004 |
| | | | | KR | 100876709 | B1 | 31 December 2008 |
| | | | | US | 2019123949 | A1 | 25 April 2019 |
| | | | | US | 10693693 | B2 | 23 June 2020 |
| | | | | EP | 2755349 | A1 | 16 July 2014 |
| | | | | EP | 2755349 | B1 | 27 April 2016 |
| | | | | US | 2014314183 | A1 | 23 October 2014 |
| | | | | US | 8971169 | B2 | 03 March 2015 |
| | | | | EP | 2320594 | A2 | 11 May 2011 |
| | | | | EP | 2320594 | A3 | 19 October 2011 |
| | | | | EP | 2320594 | B1 | 30 March 2016 |
| | | | | US | 2018062896 | A1 | 01 March 2018 |
| | | | | US | 10116478 | B2 | 30 October 2018 |
| | | | | CN | 101188597 | A | 28 May 2008 |
| | | | | CN | 100385847 | C | 30 April 2008 |
| | | | | US | 2013010808 | A1 | 10 January 2013 |
| | | | | US | 8774223 | B2 | 08 July 2014 |
| | | | | US | 2007253324 | A1 | 01 November 2007 |
| | | | | US | 7545734 | B2 | 09 June 2009 |
| | | | | US | 2009225891 | A1 | 10 September 2009 |
| | | | | US | 8254246 | B2 | 28 August 2012 |
| | | | | US | 2012307930 | A1 | 06 December 2012 |
| | | | | US | 8406118 | B2 | 26 March 2013 |
| | | | | US | 2003072254 | A1 | 17 April 2003 |
| | | | | US | 7248559 | B2 | 24 July 2007 |
| | | | | US | 2013016693 | A1 | 17 January 2013 |
| | | | | US | 8891481 | B2 | 18 November 2014 |
| CN | 103339992 | A | 02 October 2013 | EP | 2638745 | A1 | 18 September 2013 |

**INTERNATIONAL SEARCH REPORT**
Information on patent family members

| | | | International application No.<br>**PCT/CN2021/134042** | |
|---|---|---|---|---|

| Patent document<br>cited in search report | Publication date<br>(day/month/year) | Patent family member(s) | | Publication date<br>(day/month/year) |
|---|---|---|---|---|
| | | EP | 2638745 B1 | 13 July 2016 |
| | | IN | 792MUN2013 A | 12 June 2015 |
| | | ZA | 201303838 B | 26 February 2014 |
| | | ES | 2597985 T3 | 24 January 2017 |
| | | CA | 2815532 A1 | 18 May 2012 |
| | | CA | 2815532 C | 24 May 2016 |
| | | JP | 2014500663 A | 09 January 2014 |
| | | JP | 5624220 B2 | 12 November 2014 |
| | | HU | E028177 T2 | 28 December 2016 |
| | | RU | 2013126529 A | 20 December 2014 |
| | | RU | 2544000 C2 | 10 March 2015 |
| | | BR | 112013011416 A2 | 02 August 2016 |
| | | US | 2012281642 A1 | 08 November 2012 |
| | | KR | 20130085436 A | 29 July 2013 |
| | | KR | 101615684 B1 | 26 April 2016 |
| | | IL | 225784 D0 | 27 June 2013 |
| CN 104243370 A | 24 December 2014 | None | | |
| US 2011177827 A1 | 21 July 2011 | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011378888